# EUROPÄISCHE PATENTSCHRIFT

(11) **EP 2 699 498 B1**
(45) Veröffentlichungstag und Bekanntmachung des Hinweises auf die Patenterteilung: **22.02.2017**
(21) Anmeldenummer: 12719562.6
(22) Anmeldetag: 20.04.2012
(51) Int. Cl.: B65G 47/90

(54) **GREIFER, FÖRDERANLAGE UND VERFAHREN ZUM BETRIEB EINER SOLCHEN FÖRDERANLAGE**
GRIPPER, CONVEYOR SYSTEM, AND METHOD FOR OPERATING SUCH A CONVEYOR SYSTEM
ORGANE DE PRÉHENSION, INSTALLATION DE CONVOYAGE ET PROCÉDÉ DE FONCTIONNEMENT D'UNE TELLE INSTALLATION DE CONVOYAGE

(30) Priorität: 21.04.2011 CH 703112011
(43) Veröffentlichungstag der Anmeldung: 26.02.2014
(73) Patentinhaber: Ferag AG, 8340 Hinwil (CH)
(72) Erfinder: MÄDER, Carl Conrad, CH-8335 Hittnau (CH)
(74) Vertreter: Frei Patent Attorneys
(86) Internationale Anmeldenummer: PCT/CH2012/000089
(87) Internationale Veröffentlichungsnummer: WO 2012/142719

(56) Entgegenhaltungen:
- EP-A1- 1 262 431
- EP-A1- 1 790 593
- DE-A1- 19 850 539
- DE-U1- 9 217 202
- DE-U1- 20 020 456
- US-A- 3 125 369

## Beschreibung

Die Erfindung liegt auf dem Gebiet der Fördertechnik. Sie betrifft einen Greifer zum Ergreifen und gehaltenen Fördern von Gegenständen, insbesondere von räumlich ausgedehnten, symmetrischen Gegenständen, Gegenständen mit einem Haltering, hohlen Gegenständen, Gegenständen mit unterschiedlichen Formen und/oder Grössen. Der Greifer eignet sich besonders zum Ergreifen und Fördern von Preformlingen für die Produktion von Behältnissen aus Kunststoff, z.B. PET-Flaschen. Die Erfindung betrifft ausserdem eine Förderanlage mit solchen Greifern und ein Verfahren zum Betrieb einer solchen Förderanlage.

In der Fördertechnik besteht das Bedürfnis nach einfach und kostengünstig herzustellenden, robusten und flexibel einsetzbaren Greifern, die Gegenstände unterschiedlicher Form und Beschaffenheit zuverlässig ergreifen und fördern können.

Beispielsweise werden Greifer eingesetzt, um Preformlinge (Vorformlinge) für das Formblasen von Behältern aus Kunststoff und die hergestellten Behälter zwischen verschiedenen Stationen einer Blasformanlage zu fördern. Die Preformlinge sind einseitig offene Hohlkörper aus einem thermoplastischen Kunststoff mit einer im Wesentlichen rotationssymmetrischen Form. Sie weisen in der Regel ein Gewinde und einen Haltering auf. Bekannte Greifer für Preformlinge sind nach Art einer Zange gestaltet. Die Greiferbacken sind in einer Ebene angeordnet, die senkrecht zur Rotationsachse des Preformlings liegt. Sie untergreifen den Haltering nach Art einer Gabel durch Annäherung von der Seite. Fördervorrichtungen mit solchen Greifern brauchen daher im Aufnahmebereich relativ viel Platz. Die Greiferbacken haben in dem Bereich, in dem sie den Gegenstand erfassen, (Klemmbereich) eine konkave Form und sind damit an die zylinderförmige Form unterhalb des Halterings angepasst. Gegenstände mit unterschiedlichen Durchmessern können so jedoch nur innerhalb gewisser Maximal- und Minimaldurchmesser ergriffen werden. Beispiele für bekannte Preform-Greifer sind in der US 2010/0278959, US 6,612,634 oder der DE 10325693 beschrieben. Alternativ kommen Klemmdorne zum Einsatz, die zur Halterung in einen Mündungsbereich des Vorformlings einführbar sind.

Aus der US 4,921,294 ist ein Greifer zum Ergreifen von flächigen Produkten, insbesondere Druckereiprodukten, bekannt, der einen Greiferkörper, eine feststehende und eine bewegliche Greiferbacke umfasst. Der Aufbau ist spiegelsymmetrisch. Die bewegliche Greiferbacke ist durch einen spiegelsymmetrischen Drahtbügel aus Federstahl gebildet. Der Drahtbügel ist in seinen Endbereichen zu jeweils einer Helix geformt. Ausserdem bildet er, ausgehend von den Helices, zwei Haltezungen aus. Diese sind senkrecht zur Achse der Helices orientiert und voneinander beabstandet. Zwischen den Haltezungen ist der Bügel so gebogen, dass er ein längliches, gerades Bügelteil ausbildet, das sich der Nähe der gemeinsamen Achse der Helices befindet und als Presselement wirkt. Die Helices sind auf Zapfen aufgesteckt, die an einander gegenüberliegenden Seiten am Greiferkörper angeordnet sind und miteinander fluchten. Indem die Helices im Greiferkörper fixiert sind, wird der Drahtbügel gegen die feststehende Greiferbacke vorgespannt. Durch die Zapfen wird eine Schwenkachse festgelegt, um die sich die Greiferbacke drehen kann. Die Greiferbacke wird durch zwei Steuerelemente betätigt, die jeweils auf den Drahtbügel im Bereich der Haltezunge drücken. Diese Steuerelemente drücken die bewegliche Greiferbacke von der festen Greiferbacke weg, wenn sie gemeinsam betätigt werden. Sie sind dazu gegen die bewegliche Greiferbacke vorgespannt.

Diese Konstruktion ist aufgrund der Ausformung des Bügels mit zwei vorstehenden Zungen und einem länglichen Presselement an flächige Gegenstände angepasst. Zum Fördern von räumlich ausgedehnten Gegenständen mit unterschiedlicher Form eignet sie sich nicht. Der Betätigungsmechanismus besteht aus mehreren Teilen und ist daher aufwändig in der Fertigung und Wartung.

DE 198 50 539 offenbart einen Greifer nach dem Oberbegriff des Anspruchs 1.

Der Erfindung liegt daher die Aufgabe zugrunde, einen Greifer, eine entsprechende Fördereinrichtung und ein Betriebsverfahren zur Verfügung zu stellen, bei dem bzw. der die oben genannten Nachteile des Standes der Technik vermieden werden. Der Greifer soll insbesondere geeignet sein, räumlich ausgedehnte Gegenstände mit unterschiedlicher Form, z.B. Preformlinge, zuverlässig zu greifen und zu fördern. Der Greifer soll einfach und kostengünstig herstellbar und möglichst robust sein.

Die Aufgabe wird gelöst durch einen Greifer mit den Merkmalen von Anspruch 1, durch eine Förderanlage mit solchen Greifern gemäss Anspruch 13 und durch ein Betriebsverfahren für eine solche Förderanlage gemäss Anspruch 17. Die abhängigen Ansprüche, die Beschreibung und die Zeichnungen geben vorteilhafte Weiterbildungen der Erfindung an.

Der erfindungsgemässe Greifer umfasst einen Greiferkörper, eine erste Greiferbacke und eine zweite Greiferbacke. Die Greiferbacken weisen jeweils wenigstens einen Klemmbereich auf, in dem sie im Anwendungsfall mit dem Gegenstand zusammenwirken. Sie können relativ zueinander einen offenen und einen geschlossenen Zustand einnehmen und zum Halten eine Klemmkraft auf den zu ergreifenden Gegenstand ausüben. Es ist wenigstens ein Steuerelement vorhanden, das mit einer Steuerkulisse zusammenzuwirken imstande ist, und wenigstens indirekt auf eine der Greiferbacken wirkt, um diese zu bewegen. Wenigstens eine der Greiferbacken umfasst einen Backenkörper, der elastisch verformbar ist und so am Greiferkörper gelagert ist, dass der Backenkörper ohne Krafteinwirkung auf das Steuerelement eine definierte räumliche Position einnimmt und sich bei Krafteinwirkung auf das Steuerelement elastisch verformt. Der Backenkörper wird durch geeignete Lagerung im Greiferkörper vorzugsweise nicht nur entlang einer Linie verformt, sondern über seine gesamte Ausdehnung. Durch die elastische Verformung wird die Greiferbacke aus der definierten Position ausgelenkt, und der Greifer öffnet oder schliesst sich. Der Greifer hält den Gegenstand im Formschluss, Kraftschluss und/oder Reibschluss.

Mit Klemmkraft ist eine Kraft gemeint, mit welcher die Greiferbacken auf einen damit ergriffenen Gegenstand einwirken, d.h. mit welcher Kraft die Greifer den darin ergriffenen Gegenstand ergreifen. Falls kein Gegenstand ergriffen ist, können die Greiferbacken in einem geschlossenen Zustand eine Klemmkraft aufeinander ausüben. Insbesondere üben Greiferbacken in geschlossenem Zustand, wenn sie keinen Gegenstand ergreifen, keine Klemmkraft aufeinander aus.

Vorzugsweise ist der Backenkörper an wenigstens drei Punkten, die nicht entlang einer gemeinsamen Achse liegen, oder wenigstens zwei verschiedenen Achsen am Greiferkörper gelagert. Die Achsen sind beispielsweise parallel oder windschief relativ zueinander. Hierdurch wird erreicht, dass sich die Greiferbacke bei Betätigen des Steuerelements relativ zur anderen Greiferbacke bewegt, so dass sich der Greifer beispielsweise öffnet oder schliesst. Die Greiferbacke macht daher keine genaue Schwenkbewegung um eine eindeutig definierte Schwenkachse, sondern eine Bewegung, die sich durch eine Schwenkbewegung um eine Achse annähern lässt (im Folgenden: Bewegung um eine ungefähre Schwenkachse).

Unter Belastung, z.B. wenn durch das Steuerelement ein Drehmoment auf den Backenkörper übertragen wird, wird der Backenkörper mindestens in einzelnen Abschnitten verdreht (Torsion). Durch die oben beschriebene Lagerung entlang zweier Achsen bzw. an wenigstens drei Punkten kann der Backenkörper keine reine Torsionsbewegung ausführen, sondern wird wenigstens bereichsweise auch auf Biegung belastet. Hierdurch lassen sich relativ grosse elastische Energien in einem einfachen mechanischen Element, z.B. einem asymmetrischen schlaufenartigen Drahtbügel, speichern. Diese führen auch in dieser sehr einfachen Konstruktion zu grossen Rückstellkräften und damit zu einer guten Haltewirkung.

Die asymmetrische Lagerung und die einseitige Betätigung führt dazu, dass der Drahtbogen quer zur ungefähren Schwenkachse gesehen ungleichmässig geöffnet wird, d.h. an der Seite des Steuerelements mehr als an der vom Steuerelement beabstandeten Seite. Dieser Effekt kann genutzt werden, wenn Gegenstände in Richtung der ungefähren Schwenkachse aufgenommen werden sollen, indem sich der Greifer mit der etwas mehr geöffneten Seite voraus an den Gegenstand annähert.

Der Backenkörper umfasst vorzugsweise ein elastisch verformbares Material, insbesondere einen Federstahl-Draht. Er kann ein- oder mehrstückig ausgeführt sein und aus einem oder mehreren Materialien bestehen.

Erfindungsgemäss ist der Backenkörper ein Bügel aus einem draht- oder rohrförmigen Werkstoff, z.B. Metall oder Kunststoff, mit rundem, rechteckigem, quadratischem oder sonst wie geformten Querschnitt. Als "draht- oder rohrförmig" werden Elemente (im Folgenden vereinfacht "Drahtbügel" genannt) bezeichnet, deren Länge im gestreckten Zustand um ein Vielfaches grösser ist als ihre Dicke bzw. ihr Durchmesser. Eine solche Greiferbacke lässt sich einfach und kostengünstig herstellen. Die für den Greifer wichtigen Funktionen, wie die Lagerung im Greiferkörper, das elastische Verformen beim Öffnen oder Schliessen und das Festhalten/Klemmen von Gegenständen, werden durch den Drahtbügel in einem gemeinsamen Bauteil realisiert. Der Drahtbügel kann zur Vereinfachung der Herstellung auch aus mehreren verbundenen Teilen bestehen. Der Durchmesser bzw. die Dicke des Drahtmaterials ist so gewählt, dass der Backenkörper ausreichend stabil zum Halten der gewünschten Gegenstände ist und ausreichend elastisch zum Öffnen und Schliessen durch elastisches Verformen. Typischerweise liegt der Durchmesser des Drahtmaterials im Bereich von 1 bis 20 mm, vorzugsweise 3 bis 8 mm. Insbesondere liegt der Durchmesser des Drahtmaterials im Bereich von 1 bis 10 mm, vorzugsweise 1.1 bis 3.5 mm.

Vorzugsweise hat der Bügel die Form einer Schlaufe, die im Wesentlichen in einer Ebene liegt.

Die Enden der Schlaufe befinden sich vorzugsweise in räumlicher Nähe zueinander. Ein Teil des Bügels ist so geformt, dass er einen Klemmbereich ausbildet. Der Klemmbereich ist vorzugsweise so geformt, dass im geschlossenen Zustand zusammen mit der weiteren Greiferbacke eine Aufnahme mit einer definierten Mindestgrösse ausgebildet wird. Der Klemmbereich ragt dazu vorzugsweise bogenförmig aus der Ebene der Schlaufe hinaus und hat eine sich mit zunehmendem Abstand von der Ebene verjüngende Kontur, insbesondere eine halbkreisförmige, dreieckige oder mehreckige Kontur.

Die sich verjüngende Form dient zur sicheren Aufnahme von Gegenständen mit unterschiedlichen Grössen und Formen. Die Gegenstände zwingen den Greifer zu einer unterschiedlich weiten Öffnung der Greiferbacken, werden aber unabhängig vom Öffnungsgrad sicher gehalten, da der Klemmbereich durch die sich nach Aussen verjüngende Kontur von mehreren Seiten auf den Gegenstand drückt.

Alternativ zur sich verjüngenden Kontur oder zusätzlich dazu kann der Klemmbereich elastisch verformbare Klemmelemente mit einer höheren Elastizität als der Backenkörper aufweisen, die den Gegenstand beim Aufnehmen von mehreren Seiten halten. Das Klemmelement ist beispielsweise ein elastisches Element, z.B. ein Gummistreifen oder eine Schraubenfeder, das innerhalb des Klemmbereichs positioniert und gegebenenfalls zwischen dem dort auskragend gebogenen Drahtbügel aufgespannt sind. Das Einsatzspektrum des Greifers wird weiter erhöht, wenn diese Klemmelemente auswechselbar sind, so dass je nach Anforderungen unterschiedliche Elastizitäten und Klemmkräfte realisiert werden können.

Optional sind die Klemmelemente zur zusätzlichen Anpassung an die aufzunehmenden Gegenstände austauschbar.

Der Bügel weist wenigstens zwei voneinander beabstandete Befestigungsabschnitte auf, mit denen er in bzw. an Lagerbereichen des Greiferkörpers gelagert ist. Die Lagerbereiche und damit die Befestigungsabschnitte sind im Greiferkörper vorzugsweise entlang unterschiedlicher Achsen ausgerichtet, die vorzugsweise parallel verlaufen. Die Lagerbereiche sind beispielsweise Löcher und/oder durchgehende Aussparungen im Greiferkörper, in die die Endbereiche des Bügels eingesteckt und der Bügel damit eingespannt werden kann. Der Klemmbereich befindet sich insbesondere entlang des Drahtes gesehen zwischen den Befestigungsabschnitten. Durch diese Lagerung wird erreicht, dass sich der Bügel im Wesentlichen entlang seiner gesamten Ausdehnung verformt, wenn er an einer Stelle durch lokale Krafteinwirkung ausgelenkt wird. Der Greifer öffnet oder schliesst sich daher, selbst wenn nur an einer Stelle punktuell eine Kraft ausgeübt wird.

Optional weist in einem der oben beschriebenen Greifer der Backenkörper in einem Seitenbereich einen Betätigungsabschnitt auf, welcher direkt als Steuerelement fungiert oder mit einem separaten Steuerelement gekoppelt ist.

Die Gestaltung eines Steuerelements, das mit einer externen Steuerkulisse zusammenwirkt, ist beim oben beschriebenen Bügel besonders einfach: Der Bügel weist dazu vorzugsweise in einem Endbereich einen Betätigungsabschnitt auf, welcher direkt mit einer mechanischen Steuerkulisse zusammenzuwirken imstande ist oder als Träger einer Steuerrolle dient, die ihrerseits an der Steuerkulisse abrollt.

Der Betätigungsabschnitt ist dazu vorzugsweise relativ zum angrenzenden Befestigungsabschnitt abgebogen und weist vorzugsweise in eine Richtung, die senkrecht auf der ungefähren Schwenkachse der Greiferbacke steht. Durch den so gebildeten Hebel kann ein Drehmoment besonders gut auf den Bügel übertragen werden.

Alternativ zur Bügelform kann der Backenkörper auch ein in sich elastisch verformbares flächiges Element sein, z.B. eine Federstahlplatte, die im Greiferkörper eingespannt ist und einen geeignet geformten Klemmbereich ausbildet.

Vorzugsweise hat der Greifer zwei im Wesentlichen baugleich gestaltete Greiferbacken, die einzeln steuerbar sind.

Die Greiferbacken sind relativ zueinander spiegelsymmetrisch oder achssymmetrisch am Greiferkörper angeordnet. Durch das gezielte Öffnen der einen oder der anderen Greiferbacke oder das gemeinsame Bewegen beider Greiferbacken kann die Richtung beeinflusst werden, in welche die ergriffenen Gegenstände abgegeben werden, insbesondere wenn sich der Greiferkörper, in Richtung der Schwerkraft gesehen, bei der Abgabe der Gegenstände unterhalb des Gegenstands befindet. Durch die gerichtete Abgabe erhält die Gesamtanlage trotz ausgesprochen einfacher Konstruktion der Greifer einen neuen Freiheitsgrad. Die Steuerelemente für die beiden Greiferbacken befinden sich vorzugsweise an unterschiedlichen Seiten des Greiferkörpers, was die Anordnung der jeweiligen Steuerkulissen vereinfacht.

Die Greifer können sich im Betrieb oberhalb, unterhalb oder neben den aufgenommenen Gegenständen befinden. Die Gegenstände werden von oben oder von unten gegriffen oder durch Annäherung des Greifers an den Gegenstand seitlich entlang der Richtung der ungefähren Schwenkachse.

Ohne Krafteinwirkung auf das Steuerelement nehmen die Greiferbacken beispielsweise folgende Stellungen ein: Im Klemmbereich aneinander liegend (auch mit Vorspannung); im Klemmbereich mit einem geringen Abstand; Im Klemmbereich mit maximalem Öffnungsabstand. In den ersten beiden Fällen werden die Greiferbacken zum Öffnen aktiviert und umschliessen Gegenstände von Aussen. Im letzten Fall werden die Greiferbacken zum Schliessen aktiviert und ergreifen Gegenstände, indem sie im geschlossenen Zustand in eine Aussparung im Gegenstand einfahren und diesen von Innen festklemmen.

Optional umfasst ein Greifer zwei im Wesentlichen baugleich gestaltete Greiferbacken, die gegeneinander oder nach Aussen vorgespannt sind.

In einer weiteren vorteilhaften Ausgestaltung ist der Greifer selbstöffnend: Eine oder beide Greiferbacken werden geöffnet, wenn ein Gegenstand seitlich, d.h. in Richtung der ungefähren Schwenkachse, gegen die Greiferbacken drückt. Die Greiferbacken werden ausgelenkt, so dass der Gegenstand zwischen sie eingeführt werden kann. Sobald sich der Gegenstand in der Aufnahme befindet, bewegen sich die Greiferbacken aufgrund ihrer Elastizität wieder aufeinander zu und umfassen den Gegenstand in klemmender Weise. Die Greiferbacken weisen dazu vorzugsweise weitere Betätigungselemente auf oder sind mit solchen gekoppelt. Die weiteren Betätigungselemente sind so geformt, dass die Greiferbacken nach Aussen ausweichen, wenn ein Gegenstand in Richtung der ungefähren Schwenkachse, die in der Regel auch der Förderrichtung entspricht, gegen die Betätigungselemente bewegt wird.

Optional weisen Greiferbacken des Greifers zur Realisation einer Selbstöffnungsfunktion weitere Betätigungselemente auf oder sind mit solchen gekoppelt, wobei die Greiferbacken auseinander bewegt werden, wenn ein aufzunehmender Gegenstand gegen die weiteren Betätigungselemente drückt.

Als optionales Merkmal weist der Greifer mindestens zwei erste Greiferbacken und mindestens zwei zweite Greiferbacken auf. Dabei kann jede erste Greiferbacke relativ zu mindestens einer zweiten Greiferbacke einen offenen und einen geschlossenen Zustand einnehmen und eine Klemmkraft auf den zu ergreifenden Gegenstand ausüben und/oder es kann umgekehrt auch jede zweite Greiferbacke relativ zu mindestens einer ersten Greiferbacke einen offenen und einen geschlossenen Zustand einnehmen und eine Klemmkraft auf den zu ergreifenden Gegenstand ausüben.

Damit ist beispielsweise gemeint, dass jede erste Greiferbacke derart ausgebildet und angeordnet ist, dass sie relativ zu mindestens einer zweiten Greiferbacke einen offenen und einen geschlossenen Zustand einnehmen kann und auf einen ergriffenen Gegenstand eine Klemmkraft ausübt und/oder umgekehrt auch jede zweite Greiferbacke derart ausgebildet und angeordnet ist, dass sie relativ zu mindestens einer ersten Greiferbacke einen offenen und einen geschlossenen Zustand einnehmen kann und auf einen ergriffenen Gegenstand eine Klemmkraft ausübt.

Durch eine Mehrzahl von ersten und zweiten Greiferbacken können pro Greifer gleichzeitig mehrere Gegenstände ergriffen werden. Dies hat eine Erhöhung der Förderkapazität der Greifer und/oder andere verfahrenstechnische Vorteile zur Folge, wie etwa die Möglichkeit einer voneinander unabhängigen Verwendung und/oder einer voneinander verschiedenen Bestückung der mehreren ersten und zweiten Greiferbacken durch verschiedene Gegenstände und/oder eine gleichzeitige Förderung von verschiedenen Gegenständen über räumlich und/oder zeitlich verschiede Distanzen.

Optional kann jeweils eine Greiferbacke relativ zu mehreren anderen Greiferbacken einen offenen und/oder einen geschlossenen Zustand einnehmen und eine Klemmkraft auf den zu ergreifenden Gegenstand bzw. die zu ergreifenden Gegenstände ausüben.

Als weiteres optionales Merkmal kann bei einem Greifer mit mindestens zwei ersten und mindestens zwei zweiten Greiferbacken jede erste Greiferbacke relativ zu einer einzigen zweiten Greiferbacke einen offenen und einen geschlossenen Zustand einnehmen und eine Klemmkraft auf den zu ergreifenden Gegenstand ausüben, und kann gleichzeitig auch jede zweite Greiferbacke relativ zu einer einzigen ersten Greiferbacke einen offenen und einen geschlossenen Zustand einnehmen und eine Klemmkraft auf den zu ergreifenden Gegenstand ausüben.

In diesem Fall weist, ausgehend von einem Greifer mit einer Mehrzahl von Greiferbacken, also jede einzelne Greiferbacke nur eine einzige weitere Greiferbacke auf, bezüglich welcher sie einen offenen und einen geschlossenen Zustand einnehmen kann und mit welcher sie eine Klemmkraft auf den zu ergreifenden Gegenstand ausübt. Der Greifer verfügt damit über mindestens zwei separate Greiferbackenpaare. Eine Mehrzahl von Greiferbackenpaaren erlaubt einen vielseitigen Einsatz des Greifers und erhöht die Förderkapazität des Greifers. Die weiter oben erwähnten Vorteile einer Mehrzahl von Greiferbacken gelten für einen Greifer mit einer Mehrzahl von Greiferbackenpaaren ebenfalls.

Alternativ können auch Greiferbacken verschiedener Anzahl miteinander zusammenwirken (also relativ zueinander einen offenen und einen geschlossenen Zustand einnehmen und eine Klemmkraft auf den zu ergreifenden Gegenstand ausüben). Beispielsweise können zwei oder auch mehr erste Greiferbacken mit nur einer zweiten Greiferbacke zusammenwirken. Umgekehrt kann eine erste Greiferbacke beispielsweise auch mit zwei oder mehr zweiten Greiferbacken zusammenwirken. Für die zweiten Greiferbacken gilt bezüglich der ersten Greiferbacken dasselbe.

Als weiteres optionales Merkmal weist ein Greifer, bei welchem mehrere erste Greiferbacken durch ein gemeinsames Steuerelement ausgelenkt werden und/oder mehrere zweite Greiferbacken durch ein gemeinsames, anderes Steuerelement ausgelenkt werden, eine Anzahl von Steuerelementen auf, welche grösser oder gleich der Anzahl der ersten Greiferbacken und/oder grösser oder gleich der Anzahl der zweiten Greiferbacken ist.

Eine Anzahl von Steuerelementen, welche mindestens gleich gross oder grösser ist als die Anzahl der ersten und/oder der zweiten Greiferbacken, erlaubt eine flexible Steuerung von einzelnen Greiferbacken und erhöht die Flexibilität und Vielseitigkeit der Einsatzmöglichkeiten des Greifers. Alternativ kann auch eine kleinere Zahl von Steuerelementen verwendet werden. Dabei können mehrere Greiferbacken durch ein einziges Steuerelement gesteuert werden und/oder Greiferbacken werden gar nicht über Steuerelemente gesteuert, sondern beispielsweise selbstöffnend betrieben.

Als weiteres optionales Merkmal steht in einem Greifer ein erstes Greiferbackenpaar in geschlossenem Zustand in einem Winkel von 40 bis 140 Grad, insbesondere von 60 bis 120 Grad und insbesondere von 80 bis 100 Grad zu einem zweiten Greiferbackenpaar. Dabei umfasst ein Greiferbackenpaar eine erste Greiferbacke und eine zweite Greiferbacke, welche eine Klemmkraft auf den zu ergreifenden Gegenstand ausüben können.

Mit anderen Worten umfasst ein Greiferbackenpaar eine erste Greiferbacke und eine zweite Greiferbacke, welche derart ausgestaltet und eingerichtet sind, eine Klemmkraft auf den zu ergreifenden Gegenstand auszuüben. Die Greiferbacken eines Greiferbackenpaars wirken miteinander zusammen. In geschlossenem Zustand stehen ein erstes und ein zweites Greiferbackenpaar in einem Winkel von 40 bis 140 Grad zueinander. Der Winkel kann insbesondere 60 bis 120 Grad betragen. Der Winkel kann insbesondere auch 80 bis 100 Grad betragen. Insbesondere stehen das erste und das zweite Greiferbackenpaar rechtwinklig zueinander. Der Winkel zwischen den Greiferbackenpaaren in geschlossenem Zustand entspricht beispielsweise dem Winkel zwischen Längsmittelachsen von Gegenständen, welche von diesen Greiferbackenpaaren ergriffen sind.

Eine zueinander angewinkelte Anordnung von Greiferbackenpaaren (in geschlossenem Zustand) erlaubt einen einfachen und raschen Zugang zum Greifer aus verschiedenen Raumrichtungen. Dies kann ein Ergreifen und/oder Abgeben von Gegenständen durch den Greifer vereinfachen und beschleunigen. Die Einsatzmöglichkeiten des Greifers werden dadurch ebenfalls vergrössert. Alternativ können die Greiferbackenpaare aber auch in Winkeln kleiner als 40 Grad und/oder grösser als 140 Grad zueinander stehen. Insbesondere können die Greiferbackenpaare alternativ auch parallel zueinander stehen.

Die erfindungsgemässe Förderanlage umfasst ein Antriebsorgan, das entlang einer geschlossenen Umlaufbahn bewegbar ist, und eine Mehrzahl von Greifern, die an das Antriebsorgan angekoppelt oder daran ankoppelbar sind. Das Antriebsorgan ist beispielsweise ein kontinuierliches Förderorgan, das in einer Führung bewegt wird z.B. eine Kette in einem Kanal, insbesondere in einem Führungskanal. Alternativ kann das Antriebsorgan auch durch einen Rotationskörper oder durch einzelne Wagen realisiert sein.

Als optionales Merkmal umfasst die oben genannte Förderanlage zusätzlich einen Überführungsmechanismus. Der Überführungsmechanismus kann einen ergriffenen Gegenstand aus einem ersten Greifer der Förderanlage in einen zweiten Greifer der Förderanlage überführen. Dabei wird insbesondere der ergriffene Gegenstand aus einer ersten Position bezüglich des ersten Greifers in eine zweite Position bezüglich des zweiten Greifers überführt, und die erste und die zweite Position unterscheidet sich bezüglich des jeweiligen Greifers in Kontaktstellen mit dem Greifer, Lage des Gegenstands bezüglich des Greifers und/oder Orientierung des Gegenstands bezüglich des Greifers.

Der Überführungsmechanismus erlaubt ein Überführen eines ergriffenen Gegenstandes von einem ersten Greifer in einen zweiten Greifer auf derselben Umlaufbahn in derselben Förderanlage. Durch ein Überführen von ergriffenen Gegenständen können die ergriffenen Gegenstände bei einem einmaligen Durchlaufen der geschlossenen Umlaufbahn Teile der geschlossenen Umlaufbahn überspringen und/oder mehrfach durchlaufen und/oder insbesondere selektiv mehrfach durchlaufen. Dies erhöht die Einsatzmöglichkeiten der Förderanlage und macht sie flexibler. Alternativ kann auf einen Überführungsmechanismus verzichtet werden. Alternativ kann ein Überführen von ergriffenen Gegenständen auch ohne Überführungsmechanismus erfolgen. Auf ein Überführen von ergriffenen Gegenständen kann auch verzichtet werden.

Dass sich eine erste und eine zweite Position des ergriffenen Gegenstands bezüglich des jeweiligen Greifers vor und nach dem Überführen innerhalb derselben Förderanlage voneinander unterscheidet, erlaubt einen noch flexibleren und vielseitigeren Einsatz der Förderanlage. Der Unterschied der ersten und der zweiten Position kann in den Kontaktstellen des Gegenstands mit dem Greifer, der Lage des Gegenstands bezüglich des Greifers und/oder Orientierung des Gegenstands bezüglich des Greifers liegen. Durch unterschiedliche Kontaktstellen, unterschiedliche Lage und/oder unterschiedliche Orientierung kann auf den ergriffenen Gegenstand beispielsweise verschieden eingewirkt und/oder von verschiedenen Raumrichtungen auf den ergriffenen Gegenstand eingewirkt werden. Insbesondere in Kombination mit der Möglichkeit, Teile der geschlossenen Umlaufbahn zu übersprungen und/oder selektiv mehrfach zu durchlaufen, vergrössern sich die Einsatzmöglichkeiten und die Flexibilität der Förderanlage.

Alternativ können die Positionen der ergriffenen Gegenstände bezüglich des jeweiligen Greifers vor und nach dem Überführen auch gleich sein.

Bei der Förderanlage werden vorzugsweise Greifer eingesetzt, die eine einzeln steuerbare erste Greiferbacke und eine im wesentlichen baugleich gestaltete zweite Greiferbacke und diesen zugeordnete erste und zweite Steuerelemente aufweisen. Die Anlage hat ausserdem erste und zweite Steuerkulissen, welche zum gezielten Öffnen der ersten und/oder zweiten Greiferbacke mit den ersten bzw. zweiten Steuerelementen zusammenwirken. Die Steuerkulissen können an verschiedenen Öffnungsstellen entlang der Umlaufbahn angeordnet sein oder auch an der gleichen, um den Greifer bzw. eine einzelne Greiferbacke dort gezielt zu öffnen.

Vorzugsweise ist eine Öffnungsstelle vorhanden, an welcher eine erste und eine zweite Steuerkulisse angeordnet sind. Die Steuerkulissen können durch eine Steuereinrichtung aktiviert und deaktiviert werden, um wahlweise die erste oder die zweite Greiferbacke zu öffnen. Hierdurch kann die Richtung, in die der Gegenstand abgegeben wird, beeinflusst werden.

Die Greifer sind am Antriebsorgan so befestigt, dass sie die Gegenstände vorzugsweise im Wesentlichen von oben, d.h. am Antriebsorgan hängend, aufnehmen: Das geöffnete Greifermaul weist beim Aufnehmen vorzugsweise in vertikaler Richtung nach unten, und der Gegenstand kann dazwischen eingeführt werden. Die Gegenstände können daher an der Aufnahmestelle stehend angeordnet sein, und die Förderanlage kann sich über anstatt neben der Aufnahmestelle befinden. Dadurch wird in seitlicher Richtung Platz gespart. In anderen Bereichen der Bahn können die Greifer andere Orientierungen einnehmen.

Die Erfindung eignet sich insbesondere zum Ergreifen, Fördern und Loslassen von räumlich ausgedehnten Gegenständen nahezu beliebiger Form. Sie ist vor allem geeignet für symmetrische Gegenstände und/oder solche mit einem Haltering und/oder Gegenstände mit einer Hohlform. Ein bevorzugter Anwendungsfall ist das Fördern von Preformlingen für das Formblasen von Behältern aus Kunststoff, insbesondere von PET-Flaschen. Mit baugleichen Greifern können Gegenstände mit unterschiedlichen Formen und/oder Grössen im zu erfassenden Bereich gefördert werden. Aufgrund der grossen Anpassungsfähigkeit der Greifer ist auch ein gemischter Betrieb möglich, bei dem sich unterschiedliche Gegenstände gleichzeitig in der Förderanlage gefördert werden. Durch Greifer mit zwei baugleichen, individuell aktivierbaren Greiferbacken können die Gegenstände gezielt in verschiedene Richtungen abgegeben und damit verschiedenen weiterverarbeitenden Stationen zugeführt werden.

Durch die gerichtete Produktabgabe ist ein Sortieren der Gegenstände möglich. In Abhängigkeit von vorbestimmten Merkmalen, wie z.B. der Grösse, können die Gegenstände in Förderrichtung gesehen nach rechts oder nach links abgegeben und unterschiedlichen weiteren Stationen oder Förderwegen zugeführt werden. Diese Sortierfunktion ist mit einfachen Mitteln realisierbar.

Eine wie oben beschriebene Förderanlage kann optional durch ein Verfahren betrieben werden, in welchem in einem ersten Schritt ein zu ergreifender Gegenstand von einem ersten Greifer der Förderanlage ergriffen wird. In einem zweiten Schritt wird der ergriffene Gegenstand vom ersten Greifer der Förderanlage an einen zweiten Greifer der Förderanlage überführt. Und in einem dritten Schritt wird der ergriffene Gegenstand vom zweiten Greifer der Förderanlage abgegeben.

Als zusätzliche Option wird im zweiten Schritt des oben beschriebenen Verfahren der ergriffene Gegenstand aus einer ersten Position bezüglich des ersten Greifers in eine zweite Position bezüglich des zweiten Greifers überführt, wobei sich die erste und die zweite Position bezüglich des jeweiligen Greifers in Kontaktstellen mit dem Greifer und/oder Lage des Gegenstands bezüglich des Greifers und/oder Orientierung des Gegenstands bezüglich des Greifers unterscheiden.

Die Vorteile und Alternativen einer Förderanlage, welche durch ein die oben beschriebenen drei Schritte umfassendes Verfahren betrieben wird, sind bereits weiter oben bei der Beschreibung des Überführungsmechanismus beschrieben worden. Analoges gilt für die Vorteile und Alternativen von sich unterscheidenden Positionen von ergriffenen Gegenständen bezüglich des entsprechenden Greifers vor und nach dem zweiten Schritt (also vor und nach dem Überführen).

Optional durchläuft dabei ein nach dem zweiten Schritt des Verfahrens ergriffener Gegenstand mindestens teilweise einen gleichen Abschnitt der geschlossenen Umlaufbahn der Förderanlage wie ihn derselbe ergriffene Gegenstand vor dem zweiten Schritt des Verfahrens bereits durchlaufen hat. Mit anderen Worten durchläuft derselbe Gegenstand durch den zweiten Greifer ergriffen mindestens teilweise dieselbe Umlaufbahn, welche er bereits durch den ersten Greifer ergriffen durchlaufen hat.

Die Vorteile von mehrfach durchlaufenen und von insbesondere selektiv mehrfach durchlaufenen Teilen der geschlossenen Umlaufbahn sind ebenfalls bereits weiter oben beschrieben. Alternativ können Teile der Umlaufbahn aber auch übersprungen, also ausgelassen oder abgekürzt werden. Insbesondere können auf diese Weise abgeschaltete Bearbeitungsstationen umgangen werden bzw. entsprechende Teile der Umlaufbahn überbrückt werden. Die gleiche Umlaufbahn der Förderanlage kann somit wesentlich vielseitiger, flexibler und auch effizienter und kostengünstiger eingesetzt und betrieben werden.

Beispiele der Erfindung sind in den Figuren dargestellt und nachfolgend beschrieben. Es zeigen rein schematisch:
- Fig. 1a-d: einen Greifer mit zwei Greiferbacken in Form von Bügeln in verschiedenen Ansichten;
- Fig. 2a-c: den Greifer aus Fig. 1a-d in geschlossenem, einseitig und beidseitig geöffnetem Zustand;
- Fig. 3a-e: einen alternativen Greifer mit zwei Greiferbacken in Form von Bügeln in verschiedenen Ansichten;
- Fig. 4: einen Greifer mit nach Innen vorgespannten Greiferbacken;
- Fig. 5: einen Greifer mit zusätzlichen elastischen Klemmelementen im Klemmbereich;
- Fig. 6a-d: einen weiteren alternativen Greifer mit zwei Greiferbacken in Form von Bügeln und verschiedene Momentaufnahmen dieses Greifers beim Aufnehmen von Gegenständen;
- Fig. 7a+b: einen Greifer beim Abgeben eines Gegenstands durch wahlweises Öffnen einer ersten bzw. einer zweiten Greiferbacke;
- Fig. 8: eine Förderanlage;
- Fig. 9: einen Ausschnitt einer Förderanlage mit Greifern mit zwei Greiferpaaren;
- Fig. 10: einen ersten Querschnitt durch die Förderanlage aus Fig. 9;
- Fig. 11: einen zweiten Querschnitt durch die Förderanlage aus Fig. 9;
- Fig. 12: einen Teil der Umlaufbahn der Förderanlage aus Fig. 9;
- Fig. 13: eine Querschnitt durch die Umlaufbahn der Förderanlage aus Fig. 12.

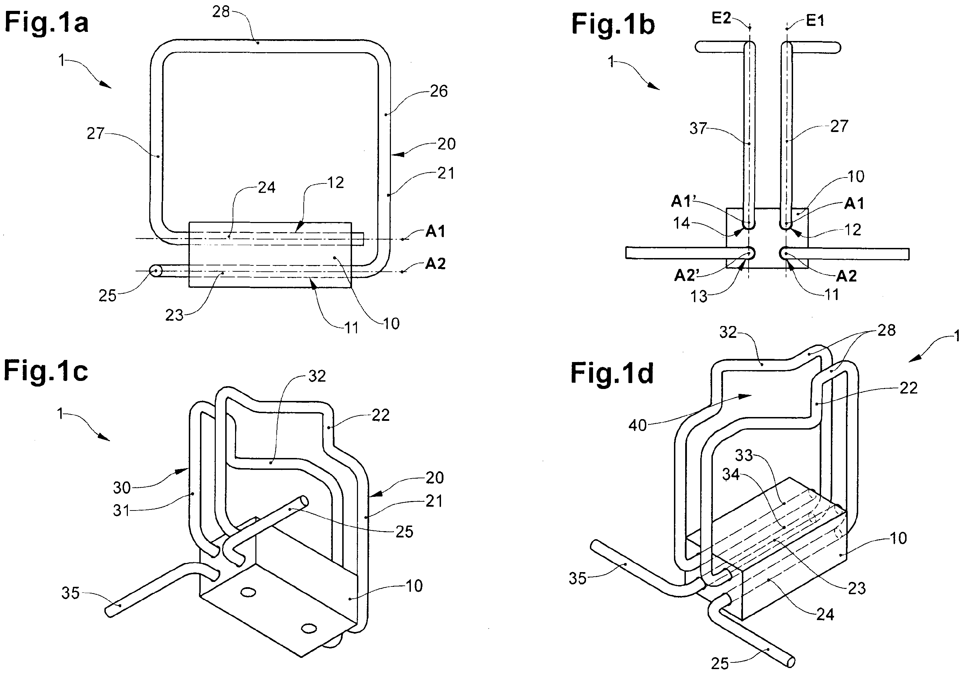

Fig. 1a-d zeigt einen Greifer 1 mit einem Greiferkörper 10 und zwei Greiferbacken 20, 30 in Form von Bügeln 21, 31 in verschiedenen Ansichten im geschlossenen Zustand.

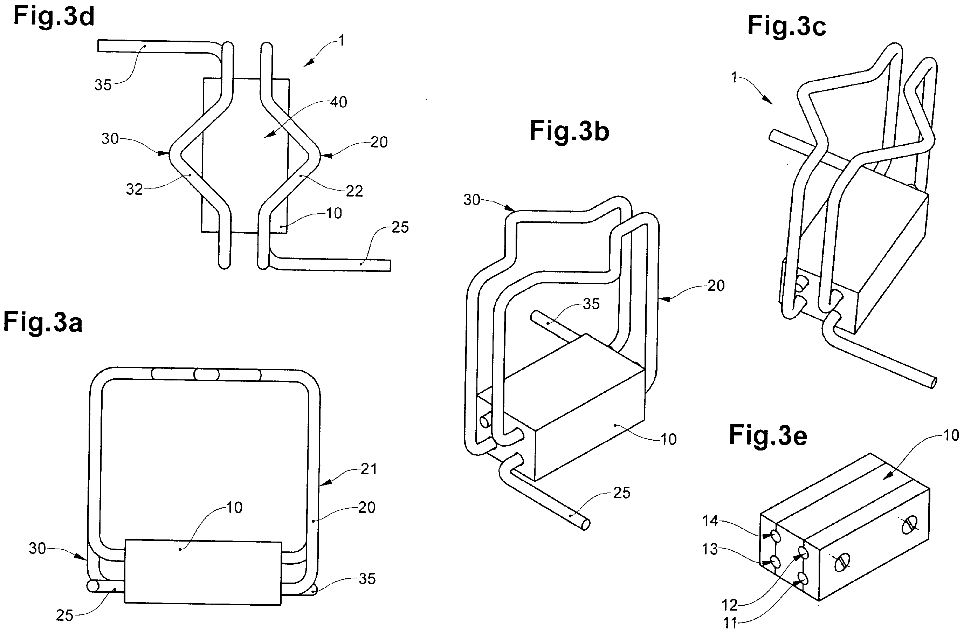

Der Greiferkörper 10 ist im Wesentlichen quaderförmig und weist vier in seiner Längsrichtung durchgehende, röhrenartige Aussparungen 11, 12, 13, 14 auf. Er kann, wie in Fig. 3e gezeigt, aus mehreren miteinander verbundenen Teilen bestehen, wobei die Aussparungen durch Nuten entlang der Verbindungsflächen dieser Teile gebildet sind. Je zwei der Aussparungen 11, 12 bzw. 13, 14 liegen in einer gemeinsamen Ebene E1 bzw. E2 und verlaufen parallel zueinander. Der Greiferkörper 10 umfasst hier nicht dargestellte zusätzliche Elemente, mit denen er an ein Antriebsorgan einer Förderanlage angekoppelt werden kann.

Die Greiferbacken 20, 30 haben die Form einer Schlaufe, die von in der Aufsicht (Fig. 1a) im Wesentlichen rechteckförmig ist und zwei zueinander parallel verlaufende, nebeneinander liegende Befestigungsabschnitte 23, 24 bzw. 33, 34 aufweist. Mit diesen Befestigungsabschnitten 23, 24 bzw. 33, 34 ist der Bügel 21, 31 in den Aussparungen 11, 12 bzw. 13, 14 im Greiferkörper 10 gelagert. Jeder der Befestigungsabschnitte 23, 24, 33, 34 geht in einen dazu etwa rechtwinklig orientierten Abschnitt 26, 27 bzw. 36, 37 über. Diese Abschnitte sind miteinander durch einen weiteren Abschnitt 28, 38 verbunden, der wieder etwa parallel zu den Befestigungsabschnitten des entsprechenden Bügels 21, 31 verläuft. Innerhalb des weiteren Abschnitts 28, 38 befindet sich der Klemmbereich 22, 32. Während die Abschnitte 23, 24, 26, 27 bzw. 33, 34, 36, 37 im Wesentlichen in der Ebene E1 bzw. E2 liegen, sind die Klemmbereiche 22, 32 senkrecht zu diesen Ebenen orientiert. Sie bilden dadurch zusammen eine Aussparung 40, in der ein Gegenstand aufgenommen und beispielsweise durch Untergreifen eines Halterings oder eines Anschlags gehalten werden kann. Im vorliegenden Beispiel sind die Klemmbereiche 22, 32 gebildet, indem der Bügel 21, 31 nach Art eines Dreiecks aus der Ebene E1 bzw. E2 nach Aussen ragt, so dass die Aussparung 40 sich nach Aussen hin verjüngt.

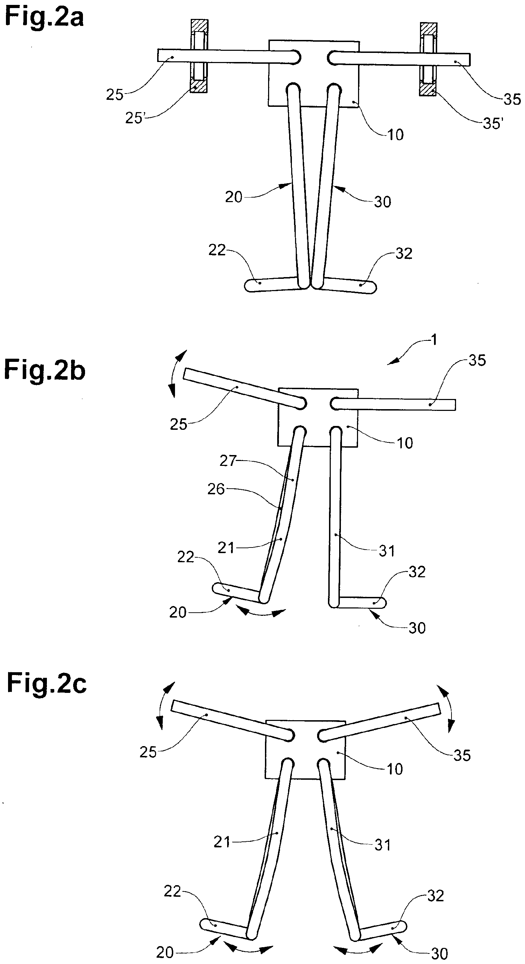

Die Bügel 21, 31 haben in einem Endbereich ausserdem einen Betätigungsabschnitt 25, 35, der aus der Ebene E1 bzw. E2 heraus ragt. Der Betätigungsabschnitt 25, 35 wirkt als Steuerelement direkt mit einer Steuerkulisse zusammen oder trägt eine Steuerrolle 25', 35' (Fig. 2a), die an einer solchen Kulisse abrollt. Die Betätigungsabschnitte 25, 35 beider Greiferbacken 20, 30 sind in diesem Beispiel an derselben Seite des Greiferkörpers 10 angeordnet, aber weisen in entgegengesetzte Richtungen (spiegelsymmetrische Bauform). Im Beispiel von Fig. 3a-e befinden sie sich an gegenüberliegenden Seiten des Greiferkörpers 10 (achssymmetrische Bauform).

Der Greifer 1 funktioniert wie folgt: Die Befestigungsabschnitte 23, 24 bzw. 33, 34 befinden sich in den Aussparungen 11, 12 bzw. 13, 14 im Greiferkörper 10. Hierdurch nehmen die Bügel 21, 31 die in Fig. 1b-d gezeigte Ruheposition ein, in der sie sich in parallelen Ebenen E1, E2 befinden. Durch geeignete Vorspannung bzw. Vorformung der Bügel kann auch erreicht werden, dass die Bügel im unbelasteten Zustand (ohne Betätigung des Steuerelements) gegeneinander drücken, wie in Fig. 2a gezeigt ist. Die Befestigungsabschnitte 23, 24 bzw. 33, 34 eines Bügels 21, 31 sind nicht entlang einer gemeinsamen Achse gelagert, sondern entlang jeweils zweier vorzugsweise paralleler Achsen A1, A2, A1', A2', die jeweils durch die Aussparungen 11, 12 bzw. 13, 14 vorgegeben sind. Dadurch können die Bügel sich nicht frei drehen, sondern verformen sich, wenn durch Betätigen der hebelartigen Betätigungsabschnitte 25, 35 von Aussen eine Kraft auf sie ausgeübt wird. Die Bügel 21, 31 werden um eine ungefähre Schwenkachse verschwenkt, die etwa im Bereich der Mitte zwischen den beiden Achsen A1, A2 bzw. A1', A2' liegt. Fig. 2b zeigt das Auslenken und Tordieren der ersten Greiferbacke 20 bei Betätigung des Hebels 25. Fig. 2c zeigt Auslenken und Tordieren beider Greiferbacken 20, 30 bei Betätigung beider Hebel 25, 35. Bei Loslassen der Betätigungsabschnitte 25, 35 gehen die elastisch verformten Bügel 21, 31 wieder in die definierte Ausgangsposition zurück.

Die Bügel 21, 31 müssen nicht einstückig gefertigt sein, sondern können auch aus mehreren Elementen bestehen, die starr miteinander verbunden sind. Diese Elemente können beispielsweise auch aus unterschiedlichen Materialien bestehen.

Fig. 3a-e zeigt eine Variante des Greifers aus Fig. 1a-d, Fig. 2a-c, bei der sich die Betätigungsabschnitte an gegenüberliegenden Seiten des Greiferkörpers 10 befinden. Die Bügel 21, 31 und der Greiferkörper 10 sind ansonsten in Aufbau und Funktion gleich. Der Greiferkörper 10 kann mehrteilig sein (Fig. 3e). Fig. 3d zeigt eine Aufsicht von oben auf die Klemmbereiche 22, 32 der Bügel 21, 31.

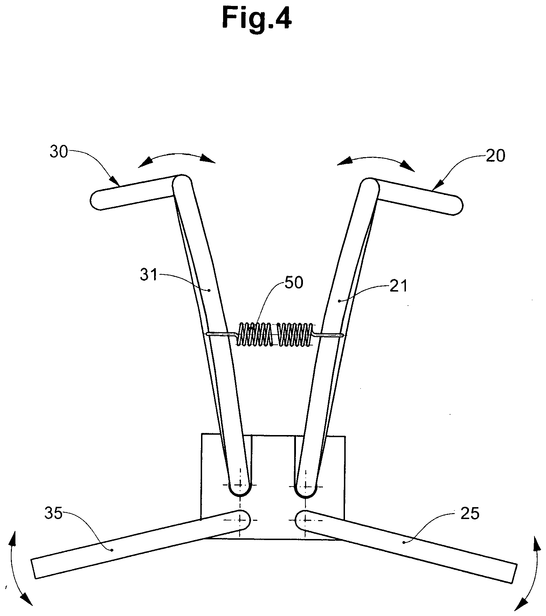

Fig. 4 zeigt einen Greifer 10 wie in Fig. 1a-d, bei dem die Bügel 21, 31 durch ein zusätzliches Vorspannelement 50, hier ein Federelement, gegeneinander vorgespannt sind.

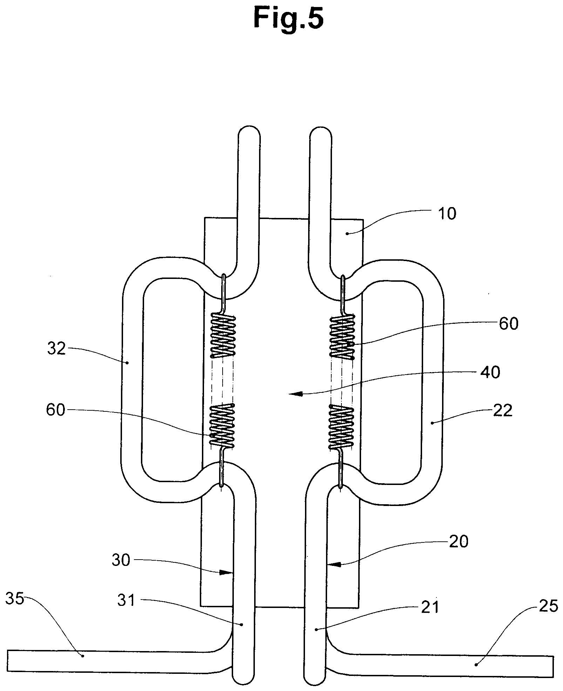

Fig. 5 zeigt einen weiteren Greifer in Aufsicht von oben auf die Klemmbereiche 22, 32 der Bügel 21, 31. Die Klemmbereiche 22, 32 sind U-förmig gebogen. Zwischen den beiden Schenkeln des U befindet sich ein Klemmelement 60, das eine grössere Elastizität als der Bügel 21, 31 hat. Es ist beispielsweise ein Federelement oder ein Gummielement. Die beiden Klemmelemente 60 dienen dazu, dass sich der Greifer 1 besser an verschiedene Umfänge und Formen der zu übernehmenden Gegenstände anpassen und den Gegenstand zuverlässiger halten kann. Die Aufnahme 40 ist genügend gross, dass die Federn nach Aussen ausweichen können. Durch geeignete Oberflächengestaltung des Klemmelements 60 können die Gegenstände auch im Reibschluss ergriffen werden.

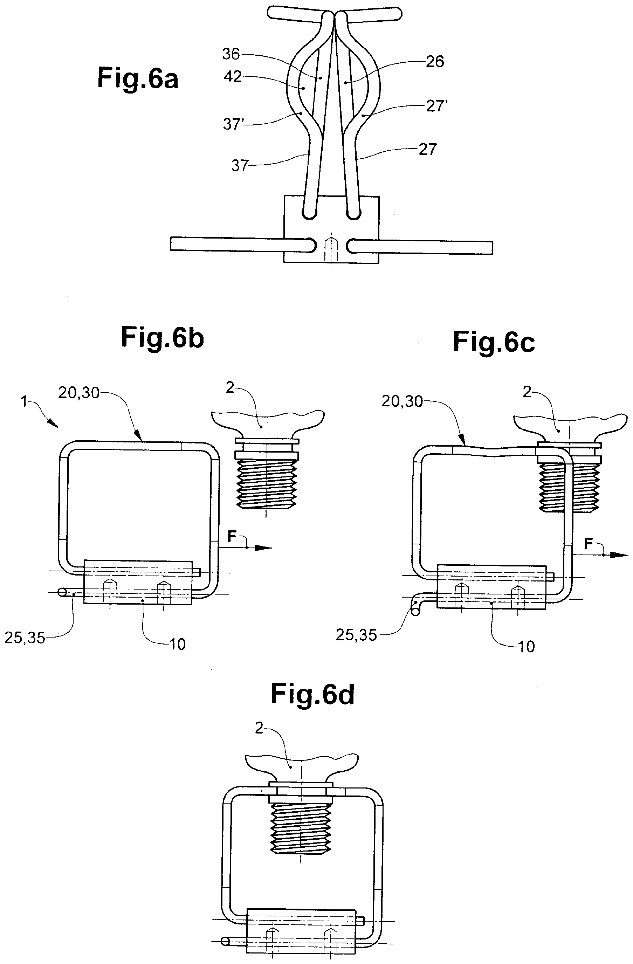

Fig. 6a-d zeigen eine Variante des Greifers aus Fig. 1a-d mit einer Selbstöffnungs-Funktion. Einer der seitlichen Abschnitte 27, 37 des Bügels 21, 31 ist bereichsweise U-förmig gebogen, so dass zwischen den Abschnitten 27, 37 eine Aussparung 42 gebildet ist. Diese U-förmigen Abschnitte dienen als Betätigungselement 27', 37' für das wenigstens teilweise Öffnen des Greifers 1 durch einen aufzunehmenden Gegenstand, wenn der Greifer von der Seite, d.h. in Fig. 6a senkrecht zur Bildebene und in Fig. 6b-d in Förderrichtung F, gegen den Gegenstand 2 bewegt wird (Fig. 6b). Der seitlich angenäherte Gegenstand 2 drückt die beiden Schenkel 27, 37 auseinander (Fig. 6c). Hierdurch öffnet sich der Greifer 1 etwas, so dass der Gegenstand in die Aufnahme 40 im Klemmbereich hineinbewegt und beim Zurückschnappen der Greiferbacken zwischen diesen aufgenommen wird (Fig. 6d). Die Betätigungsabschnitte 25, 35 werden nicht durch eine Steuerkulisse, sondern nur indirekt über den Bügel 21, 31 bewegt.

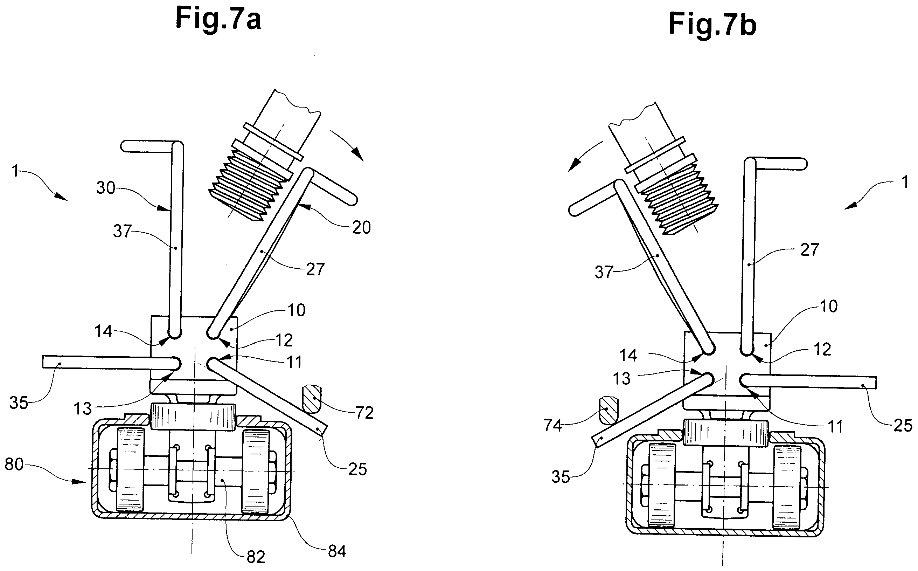

Fig. 7a+b zeigt einen Greifer 1 beim Abgeben eines Gegenstands 2 durch wahlweises Öffnen der ersten bzw. der zweiten Greiferbacke 20, 30 durch eine erste bzw. zweite Steuerkulisse 72, 74. Wird die linke Greiferbacke 30 aktiviert, wird sie nach links unten ausgelenkt. Der fällt dann Gegenstand 2 nach links (Fig. 7a). Beim Öffnen der rechten Greiferbacke fällt der Gegenstand entsprechend nach rechts (Fig. 7b). Auf diese Weise kann eine richtungsgesteuerte Abgabe und damit beispielsweise eine Sortierfunktion erreicht werden.

Fig. 7a+b zeigen ausserdem die Lagerung des Greifers 1 an einem Antriebsorgan 82 einer Förderanlage 80. Das Antriebsorgan 82 ist hier eine insbesondere kontinuierlich bewegte Kette, deren Bewegungsbahn durch einen Kanal 84 festgelegt wird. Die Förderrichtung ist senkrecht zur Bildebene. Die Kette 82 umfasst mehrere Kettenglieder, von denen beispielsweise jedes oder jedes zweite als Träger für den Greifer 1 dient.

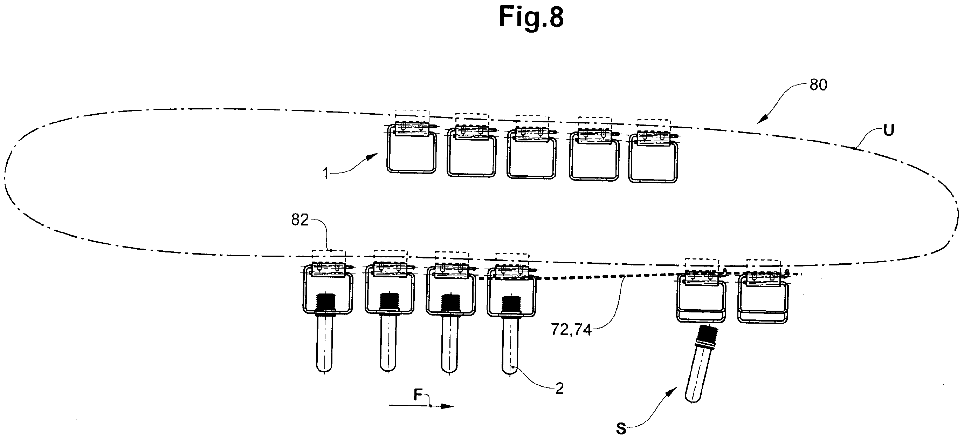

Fig. 8 zeigt eine erfindungsgemässe Förderanlage 80 mit einem Antriebsorgan 82, hier einer Kette, die entlang einer geschlossenen Umlaufbahn U bewegbar ist. Eine Mehrzahl von Greifern 1 sind an das Antriebsorgan 82 angekoppelt. Es sind ausserdem Steuerkulissen 72, 74 vorhanden, die mit den Steuerelementen 25, 35 so zusammenwirken, dass die Greifer 1 an einer Öffnungsstelle S geöffnet werden. Durch Betätigung der ersten Steuerelemente 25 werden die in Förderrichtung F rechten Greiferbacken 20 geöffnet und durch Betätigung der zweiten Steuerelemente 35 die linken Greiferbacken 30. Die Steuerkulissen 72, 74 sind vorzugsweise schaltbar, so dass wahlweise die eine oder die andere oder beide aktiviert werden können, um den Gegenstand 2 wie in Fig. 7a+b gezeigt an unterschiedliche Verarbeitungswege abzugeben.

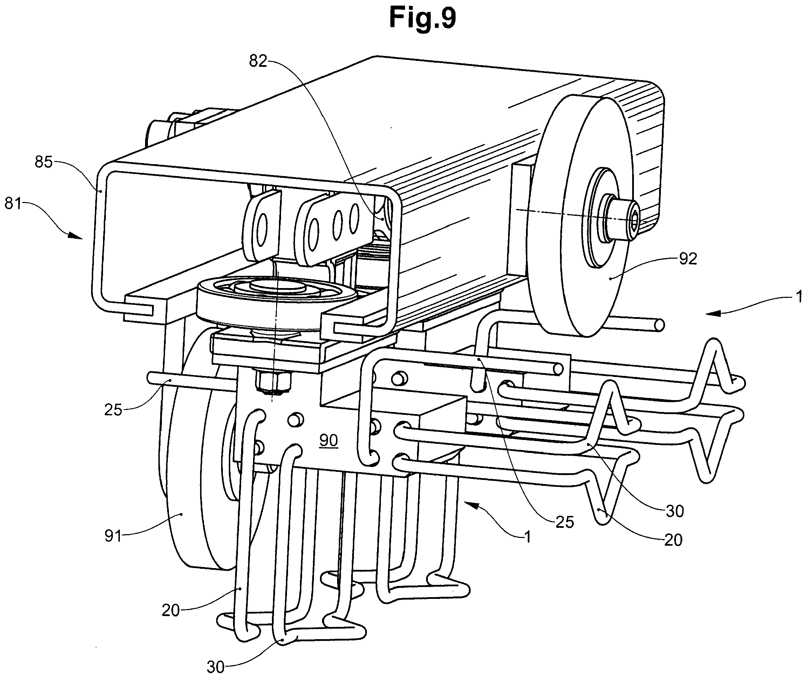

Fig. 9 zeigt in perspektivischer Ansicht einen Ausschnitt einer Förderanlage 81, welche Greifer 1 mit zwei Greiferpaaren umfasst. In Fig. 9 sind zwei Greifer 1 abgebildet, welche am Antriebsorgan 82 befestigt sind. Das Antriebsorgan 82 ist eine Kette und bewegt sich innerhalb eines Kanals, welcher hier als Führungskanal 85 ausgebildet ist. Die Kette 82 umfasst mehrere Kettenglieder, von denen beispielsweise jedes oder jedes zweite als Träger für den Greifer 1 dient. Ein Greifer 1 weist dabei einen L-förmigen Greiferkörper 90 mit einem langen und einem senkrecht dazu stehenden kurzen Schenkel auf. Eine Stirnseite des kurzen Schenkels des L-förmigen Greiferkörpers 90 ist am Antriebsorgan 82 befestigt.

Auf einer der Stirnseite des kurzen Schenkels des Greiferkörpers 90 gegenüberliegenden Stelle des Greiferkörpers 90 ist ein erstes Greiferpaar angeordnet. Das erste Greiferpaar setzt sich aus einer ersten Greiferbacke 20 und einer zweiten Greiferbacke 30 zusammen. Die Greiferbacken 20, 30 sind baugleich mit den Greiferbacken des Greifers 1 in Fig. 1 und sind auf dieselbe Weise mit Greiferkörper 90 verbunden (d.h. in Aussparungen des Greiferkörpers 90 gelagert). Die erste Greiferbacke 20 weist einen Betätigungsabschnitt 25 auf. Im in Fig. 9 gezeigten geschlossenen Zustand erstreckt sich oder weist das erste Greiferbackenpaar in Richtung einer Längsachse des kurzen Schenkels des Greiferkörpers 90. Mit anderen Worten weist beispielsweise eine Längsachse eines vom ersten Greiferbackenpaar ergriffenen Gegenstandes 2 in Richtung der Längsachse des kurzen Schenkels des Greiferkörpers 90.

Auf einer Stirnseite des langen Schenkels des Greiferkörpers 90 ist ein zweites Greiferpaar angeordnet. Das zweite Greiferpaar ist baugleich mit dem ersten Greiferpaar und setzt sich ebenfalls aus einer ersten Greiferbacke 20 und einer zweiten Greiferbacke 30 zusammen. Auch hier weist die erste Greiferbacke 20 einen Betätigungsabschnitt 25 auf. Im in Fig. 9 gezeigten geschlossenen Zustand erstreckt sich oder weist das zweite Greiferbackenpaar in Richtung einer Längsachse des langen Schenkels des Greiferkörpers 90. Mit anderen Worten weist eine Längsachse eines vom zweiten Greiferbackenpaar ergriffenen Gegenstandes 2 in Richtung der Längsachse des langen Schenkels des Greiferkörpers 90. Somit steht das zweite Greiferbackenpaar in geschlossenem Zustand senkrecht zum ersten Greiferbackenpaar.

Eine erste Steuerkulisse 91 und eine zweite Steuerkulisse 92 sind beispielsweise am Führungskanal 85 der Förderanlage 81 befestigt. Fig. 9 zeigt die Förderanlage 82 an einer Öffnungsstelle S, da die Greifer 1 durch die Steuerkulissen 91, 92 geöffnet werden können. Die erste Steuerkulisse 91 ist derart angeordnet, dass sie mit dem Betätigungsabschnitt 25 des ersten Greiferbackenpaares zusammenwirken kann. Die zweite Steuerkulisse 91 ist derart angeordnet, dass sie mit dem Betätigungsabschnitt 25 des zweiten Greiferbackenpaares zusammenwirken kann. Die erste Steuerkulisse 91 und die zweite Steuerkulisse 92 sind beide baugleich und sind als drehgelagerte Scheiben ausgebildet, deren radial aussenliegende Seite (also die Umfangseite der Scheiben) gegebenenfalls mit den Betätigungsabschnitten 25 zusammenwirkt.

In Fig. 9 sind die erste und zweite Steuerkulisse 91 resp. 92 derart in einer Auslöseposition am Führungskanal 85 befestigt, dass sie bei einer Bewegung des Antriebsorgans 82 durch diesen Führungskanal 85 immer mit allen an ihnen vorbeibewegten Betätigungsabschnitten 25 zusammenwirken. Das heisst, die Steuerkulissen 91, 92 wirken mit allen Betätigungsabschnitten 25 zusammen, welche an an diesem Antriebsorgan 82 befestigten Greifern 1 vorliegen, wenn diese Befestigungsabschnitte 25 durch die Bewegung dieses Antrieborgans 82 bedingt an den Steuerkulissen 91 resp. 92 vorbeibewegt werden.

Alternativ können die Steuerkulissen 91, 92 auch derart am Führungskanal 85 befestigt werden, dass die Steuerkulissen die oben beschriebene Auslöseposition nur zeitweise einnehmen und zeitweise eine Nichtauslöseposition einnehmen, in welcher die Steuerkulissen 91, 92 nicht mit vorbeibewegten Betätigungsabschnitten zusammenwirken. Auf diese Weise kann ein Zusammenwirken der Steuerkulissen 91, 92 mit den vorbeibewegten Betätigungsabschnitten 25 ein- und ausgeschaltet werden. Die Steuerkulissen 91, 92 können beispielsweise durch eine Steuereinrichtung aktiviert und deaktiviert werden.

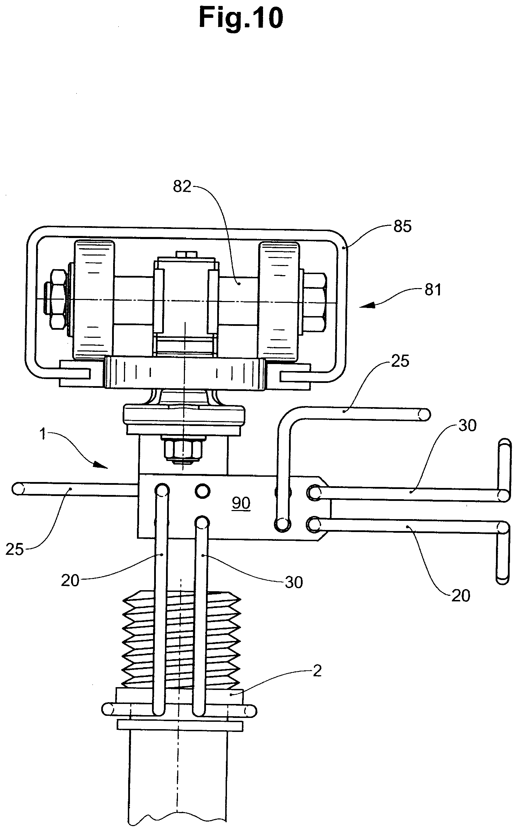

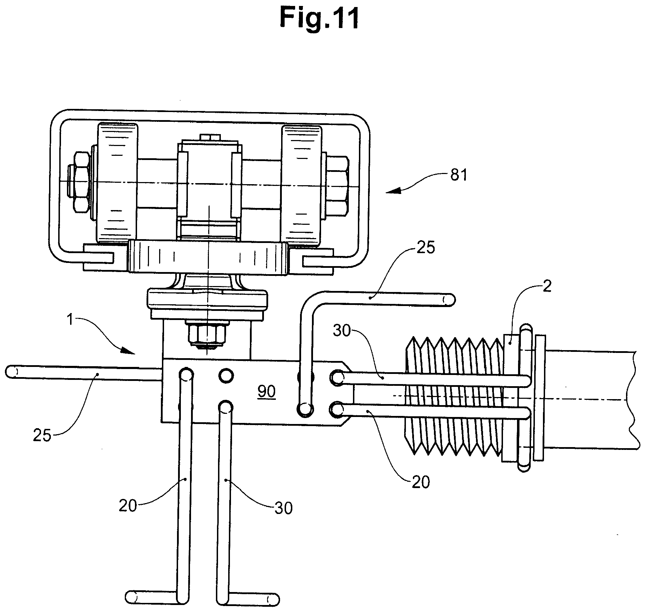

Fig. 10 und Fig. 11 zeigen beide einen Querschnitt durch die bereits in Fig. 9 gezeigte Förderanlage 81. In Fig. 10 ist ein erster Querschnitt gezeigt, in welchem ein Gegenstand 2 vom ersten Greiferbackenpaar des Greifers 1 ergriffen ist. Die Längsachse des vom ersten Greiferbackenpaar ergriffenen Gegenstands 2 zeigt in Richtung der Längsachse des kurzen Schenkels des Greiferkörpers 90. Die Längsachse des vom ersten Greiferbackenpaar ergriffenen Gegenstands 2 steht dabei senkrecht zur Richtung der Längsachse des langen Schenkels des Greiferkörpers 90.

In Fig. 11 ist ein zweiter Querschnitt gezeigt, in welchem ein Gegenstand 2 vom zweiten Greiferbackenpaar ergriffen ist. Die Längsachse des vom zweiten Greiferbackenpaar des Greifers 1 ergriffenen Gegenstands 2 zeigt in Richtung der Längsachse des langen Schenkels des Greiferkörpers 90. Die Längsachse des vom zweiten Greiferbackenpaar ergriffenen Gegenstands 2 steht dabei senkrecht zur Richtung der Längsachse des kurzen Schenkels des Greiferkörpers 90. Somit steht die Längsachse des vom zweiten Greiferbackenpaar ergriffenen Gegenstands 2 senkrecht zur Richtung der Längsachse eines vom ersten Greiferbackenpaar ergriffenen Gegenstandes 2.

In den gezeigten Ausführungsformen erstreckt sich die Längsachse eines ergriffenen Gegenstandes 2 jeweils in dieselbe Richtung, in welche sich jeweils die Greiferbacken erstrecken, respektive parallel zu dieser Richtung. Die Aussagen über die Richtung bezüglich der Längsachse eines ergriffenen Gegenstandes 2 gelten also auch bezüglich der Richtungen, in welche sich die Greiferbacken erstrecken.

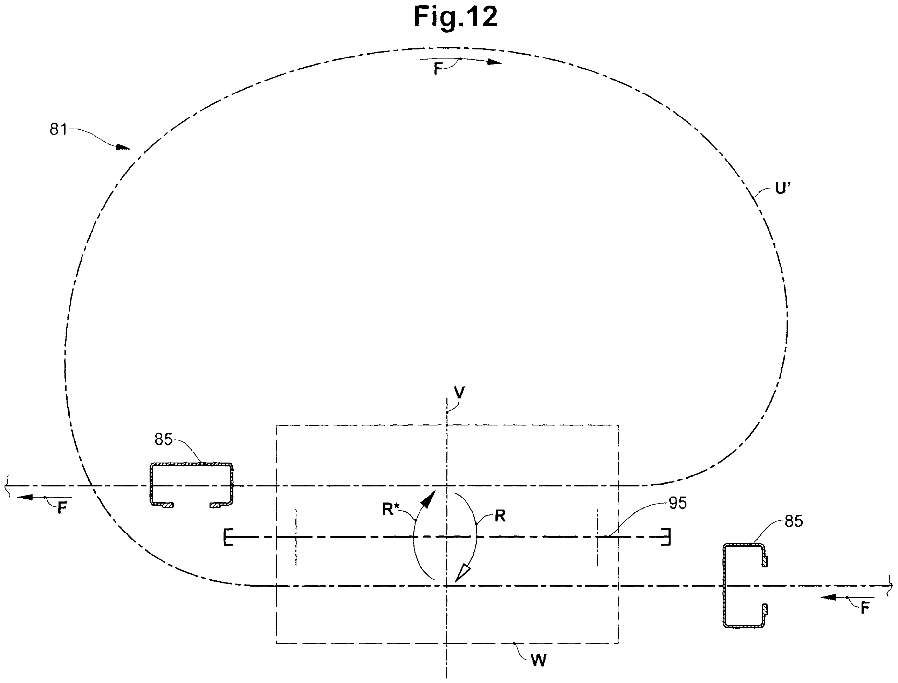

Fig. 12 zeigt einen Teil der Umlaufbahn U' der Förderanlage 81 aus Fig. 9 in Draufsicht. Die Förderrichtung F ist eingezeichnet und verläuft von Rechts nach Links mit einer entsprechend entgegen gesetzten Förderrichtung F im Bereich einer Schlaufe in der Umlaufbahn U'. Der Führungskanal 85 (und damit auch das Antriebsorgan 82 und die daran befestigten Greifer 1) dreht sich im Verlauf der Schleife der Umlaufbahn U' um 90 Grad um eine Drehachse, welche parallel zur Förderrichtung F steht. Ein Bereich der Umlaufbahn U' nach Beginn der Schlaufe und ein Bereich der Umlaufbahn U' vor Ende der Schlaufe verlaufen parallel zueinander. Diese Bereiche definieren eine Überführungszone W. In der Überführungszone W ist zwischen den parallel verlaufenden Bereichen der Umlaufbahn U' und parallel dazu ein Rundlauf 95 angeordnet.

Wie in Fig. 12 schematisch durch die Orientierung der gezeichneten Querschnitte der Kanäle 85 dargestellt, tritt der Greifer 1 in Förderrichtung F vom rechten Rand der Fig. 12 zum ersten Mal (für einen ersten Durchlauf) in die Überführungszone W ein, wenn das erste Greiferpaar des Greifers 1 in der Zeichnungsebene der Fig. 12 liegt. In Förderrichtung hinter der Schlaufe der Umlaufbahn U' liegend tritt der Greifer 1 in Förderrichtung F vom rechten Rand der Fig. 12 zum zweiten Mal (für einen zweiten Durchlauf) in die Überführungszone W ein. Die Orientierung des Greifers 1 bleibt beim Durchqueren bzw. Durchlaufen der Überführungszone sowohl beim ersten Durchlauf als auch beim zweiten Durchlauf unverändert.

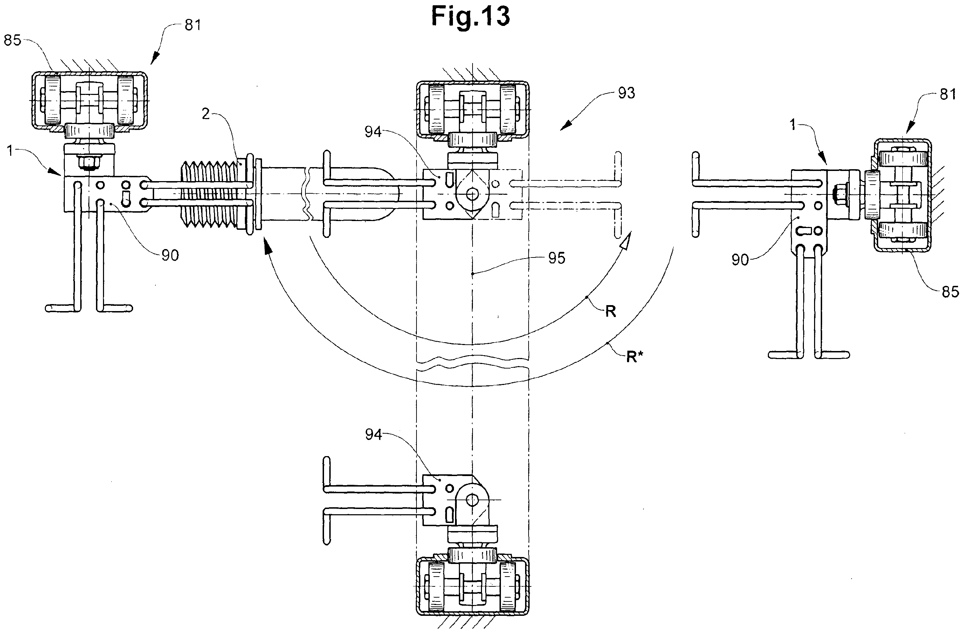

In der Überführungszone W wird ein von einem zweiten Greiferbackenpaar eines Greifers 1 ergriffener Gegenstand 2 in ein erstes Greiferbackenpaar eines anderen Greifers 1 überführt. Das Überführen des Gegenstandes 2 kann beispielsweise durch einen Überführungsmechanismus 93 in einer Überführungsrichtung R (dargestellt durch einen Pfeil mit leerer Spitze) erfolgen, wie zur einfacheren Darstellung nicht in Fig. 12, sondern in Fig. 13 in einem Querschnitt durch die in Fig. 12 eingezeichnete Schnittebene V gezeigt.

Wird ein Gegenstand 2 von einem Greifer 1 durch das zweite Greiferbackenpaar ergriffen und entlang der Umlaufbahn U' in Förderrichtung F gefördert, so durchläuft der Gegenstand die Überführungszone W ein erstes Mal. Dann durchläuft der Gegenstand 2 die Schlaufe der Umlaufbahn U' auch zum ersten Mal. Daraufhin durchläuft der Gegenstand 2 die Überführungszone W zum zweiten Mal und wird bei diesem zweiten Durchlauf der Überführungszone W vom zweiten Greiferbackenpaar des Greifers 1 in Überführungsrichtung R in ein erstes Greiferbackenpaar eines weiteren Greifers 1 überführt, wobei dieser weitere Greifer 1 zum ersten Mal die Überführungszone W durchläuft. Der nun vom ersten Greiferbackenpaar des weiteren Greifers 1 ergriffene Gegenstand durchläuft die Schlaufe der Umlaufbahn U' nun zum zweiten Mal und durchläuft schlussendlich die Überführungszone W ein drittes Mal, ohne dabei aber wieder in einen anderen Greifer 1 überführt zu werden.

Auf diese Weise durchläuft ein von der Förderanlage 81 geförderter Gegenstand 2 die Schlaufe der Umlaufbahn U' zweimal, während die Greifer 1 die Schlaufe nur einmal durchlaufen. Der Gegenstand 2 legt den doppelten Weg der Schlaufe in der Umlaufbahn U' zurück. Dies kann sehr vorteilhaft dazu benutzt werden, um etwa Förderanlagen zu verkürzen oder zu vereinfachen. Dies spart Kosten, Raum und Zeit (etwa bei der Wartung, Umrüstung und/oder Reinigung). Die Schlaufe kann dabei eine beliebige Gestalt oder Ausformung annehmen. Auch die Länge der Schlaufe kann variiert werden.

Beispielsweise kann durch das Überführen des geförderten Gegenstandes 2 eine Kühlstrecke in einer nur halb so langen Schlaufe ausgebildet werden (also in einer Schlaufe mit halber Wegstrecke im Vergleich mit einer Schlaufe ohne Überführen), ohne dass bei gleicher Fördergeschwindigkeit die Kühldauer hierbei verkürzt wird. Beispielsweise kann aber auch eine Reinigungsanlage zweimal durchlaufen werden, um den Reinigungsprozess zweimal anzuwenden, ohne allerdings zwei Reinigungsanlagen, sondern nur eine Reinigungsanlage dafür zu benötigen. Dasselbe gilt auch für alle anderen Prozesse und Anwendungen, welche mehrfach auf den Gegenstand 2 anzuwenden sind, beispielsweise etwa Bestrahlung mit sichtbarem Licht, UV-Licht, elektromagnetischen Strahlen anderer Wellenlänge und anderer ionisierender und/oder nichtionisierender Strahlung. Auch beispielsweise eine wiederholte Erwärmung und/oder Abkühlung oder eine wiederholte Beschichtung, Bemalung, und/oder Lackierung kann durch die Förderanlage 81 vorteilhaft durchgeführt werden.

Alternativ kann die Umlaufbahn U' in einer der eingezeichneten Förderrichtung F entgegen gesetzten Richtung durchlaufen werden. Alternativ kann das Überführen auch in einer der Überführungsrichtung R entgegen gesetzten Überführungsrichtung R* erfolgen (in den Figuren mit einem Pfeil mit ausgefüllter Spitze bezeichnet). Durch ein Fördern entgegen der Förderrichtung F oder durch ein Überführen in Überführungsrichtung R* wird ein von einem zweiten Greiferbackenpaar eines Greifers 1 ergriffener Gegenstand 2 bereits beim ersten Durchlauf der Überführungszone W in ein erstes Greiferbackenpaar eines weiteren Greifers 1 überführt. Da dieser weitere Greifer 1 bereits die Schlaufe der Umlaufbahn U' durchlaufen hat, durchläuft der von ihm ergriffene Gegenstand 2 die Schlaufe überhaupt nicht. Die Schlaufe der Umlaufbahn U' wird also von Gegenstand 2 übersprungen oder mit anderen Worten übergangen oder überbrückt. Dies kann beispielsweise einem Umgreifen bzw. Umpositionieren des Gegenstandes 2 relativ zu den Greifern 1 der Förderanlage 81 dienen. So kann beispielsweise ein Gegenstand 2 horizontal ausgerichtet von einem Greifer 1 ergriffen, an einen weiteren (gedrehten) Greifer 1 übergeben und nach einem Zurückdrehen des weiteren Greifers 1 vertikal ausgerichtet weitergefördert werden.

Optional kann der Überführungsmechanismus 93 derart ausgebildet sein, dass er Gegenstände 2 sowohl in Überführungsrichtung R als auch der dazu entgegen gesetzten Überführungsrichtung R* überführen kann.

Ein Überführungsmechanismus 93 stellt bezüglich des Stromes der geförderten Gegenstände 2 eine Weiche dar, welche es je nach Ausbildung und Überführungsrichtung R bzw. R* erlaubt, dass geförderte Gegenstände 2 bei einem einmaligen Durchlaufen der geschlossenen Umlaufbahn der Förderanlage gewisse Teile oder Abschnitte dieser geschlossenen Umlaufbahn der Förderanlage auslassen bzw. überspringen oder diese Teile oder Abschnitte doppelt bzw. noch häufiger durchlaufen oder diese Teile oder Abschnitt der Umlaufbahn genau nur einmal durchlaufen (wobei im letzten Fall der Überführungsmechanismus 93 den Gegenstand 2 beispielsweise nicht überführt).

Optional können auch mehrere Überführungsmechanismen 93 in einer Überführungszone W angeordnet sein. Geförderte Gegenstände 2 können beispielsweise gewisse Teile oder Abschnitte einer geschlossenen Umlaufbahn der Förderanlage auch drei Mal oder mehr durchlaufen, indem sie in der Überführungszone W zwei Mal oder mehr überführt werden.

Fig. 13 zeigt einen Querschnitt durch die Umlaufbahn U' der Förderanlage 81 aus Fig. 12. Der Querschnitt verläuft dabei in der Überführungszone W entlang der in Fig. 12 eingezeichneten Schnittebene V-V. Fig. 13 zeigt den Überführungsmechanismus 93. Der Überführungsmechanismus 93 umfasst einen Rundlauf 95 und entlang dem Rundlauf 95 bewegte Überführungselemente 94. Die Überführungselemente 94 bewegen sich während des Überführens entlang des Rundlauf 95 mit derselben Geschwindigkeit in derselben Richtung wie die Greifer 1 entlang der geschlossenen Umlaufbahn U'. Ein Überführungselement 94 ergreift auf der linken Seite der Fig. 13 einen Gegenstand 2, welcher zuerst von einem zweiten Greiferbackenpaar eines Greifers 1 ergriffen ist. Danach gibt dieser Greifer 1 den Gegenstand 2 ab, und das Überführungselement 94 bzw. der Überführungsmechanismus 93 schwenkt den Gegenstand 2 in Überführungsrichtung R zu einem weiteren Greifer 1. Dieser weitere Greifer 1 ergreift den Gegenstand 2 mit seinem ersten Greiferbackenpaar. Je nachdem, wie die Anlage betrieben wird, kann das auf der linken Seite auch das erste Greiferbackenpaar einen weiteren Gegenstand 2 halten, oder auf der rechten Seite auch das zweite Greiferbackenpaar einen weiteren Gegenstand 2 halten (nicht eingezeichnet).

Die Position eines ergriffenen Gegenstandes 2 bezüglich des Greifers 1 kann beispielsweise auch für eine spezifische Bearbeitung und insbesondere für bestimmte Bearbeitungsstationen wichtig sein. Dies ist etwa bei verschiedenen Orientierungen bei verschiedenen Herstellungs- und/oder Bearbeitungsschritten der Fall, beispielsweise bei einer Herstellung in vertikaler Lage und einer Bearbeitung in horizontaler Lage. Durch ein Überführen des ergriffenen Gegenstandes 2 von einem Greifer 1 in einen weiteren Greifer 1 derselben Umlaufbahn U', wobei der ergriffene Gegenstand 2 seine Position bezüglich des jeweiligen Greifers 1 ändert, kann beispielsweise ein Zugriff auf den geförderten Gegenstand 2 oder eine Bearbeitung desselben erleichtert oder sogar erst ermöglicht werden.

Die Greifer 1 der Figuren 1-7, 9-11 oder deren Verallgemeinerungen und/oder einzelne Merkmale und/oder Bestandteile dieser Greifer 1 oder deren Verallgemeinerungen können mit Förderanlagen 80, 81 der Figuren 8, 12-13 oder deren Verallgemeinerungen und/oder einzelnen Merkmalen und/oder Bestandteilen dieser Förderanlagen 80, 81 kombiniert werden.

Die Greifer 1 der Figuren 1-7, 9-11 oder deren Verallgemeinerungen und/oder einzelne Merkmale und/oder Bestandteile dieser Greifer 1 oder deren Verallgemeinerungen können auch miteinander kombiniert werden. Auch die Förderanlagen 80, 81 der Figuren 8, 12-13 oder deren Verallgemeinerungen und/oder einzelne Merkmalen und/oder Bestandteile dieser Förderanlagen 80, 81 können miteinander kombiniert werden

## Patentansprüche

1. Greifer (1) zum Ergreifen und gehaltenen Fördern von Gegenständen (2), insbesondere zum Erfassen und Fördern von räumlich ausgedehnten, symmetrischen Gegenständen, mit einem Greiferkörper (10), einer ersten Greiferbacke (20) und einer zweiten Greiferbacke (30), die jeweils wenigstens einen Klemmbereich (22, 32) aufweisen, relativ zueinander einen offenen und einen geschlossenen Zustand einnehmen und eine Klemmkraft auf den zu ergreifenden Gegenstand (2) ausüben können, und mit wenigstens einem Steuerelement (25, 35), das mit einer Steuerkulisse (72, 74, 91, 92) zusammenzuwirken imstande ist, wobei wenigstens eine der Greiferbacken (20, 30) einen Backenkörper (21, 31) umfasst, der elastisch verformbar ist und so am Greiferkörper (10) gelagert ist, dass die Greiferbacken (20, 30) ohne Krafteinwirkung auf das Steuerelement (25, 35) eine definierte räumliche Position einnehmen und sich bei Krafteinwirkung auf das Steuerelement (25, 35) und/oder auf die Greiferbacken (20, 30) verformen und aus der definierte räumliche Position ausgelenkt werden, **dadurch gekennzeichnet, dass** der Backenkörper ein Bügel (21, 31) aus einem draht- oder rohrförmigen Werkstoff ist.

2. Greifer (1) nach Anspruch 1, **dadurch gekennzeichnet, dass** der Backenkörper (21, 31) an wenigstens drei Punkten, die nicht entlang einer gemeinsamen Achse liegen, oder wenigstens zwei verschiedenen Achsen (A1, A2, A1', A2') am Greiferkörper (10) gelagert ist.

3. Greifer (1) nach Anspruch 1 oder 2, **dadurch gekennzeichnet, dass** der Backenkörper (21, 31) Abschnitte aufweist, die bei Krafteinwirkung auf das Steuerelement und/oder beim Halten eines Gegenstands auf Torsion und Biegung belastet werden.

4. Greifer (1) nach einem der vorangegangenen Ansprüche, **dadurch gekennzeichnet, dass** der Backenkörper wenigstens teilweise aus einem elastisch verformbaren Material besteht.

5. Greifer (1) nach einem der vorangegangenen Ansprüche, **dadurch gekennzeichnet, dass** der Backenkörper ein- oder mehrstückig ist.

6. Greifer (1) nach einem der vorangegangenen Ansprüche, **dadurch gekennzeichnet, dass** der Backenkörper (21, 31) wenigstens zwei voneinander beabstandete Befestigungsabschnitte (23, 24, 33, 34) aufweist, zwischen denen sich der Klemmbereich (22, 32) befindet und mit denen der Backenkörper (21, 31) in bzw. an Lagerbereichen (11, 12, 13, 14) des Greiferkörpers (10) gelagert ist, wobei die Lagerbereiche (11, 12, 13, 14) und damit die Befestigungsabschnitte (23, 24, 33, 34) im Greiferkörper (10) entlang unterschiedlicher Achsen (A1, A2, A1', A2') ausgerichtet sind.

7. Greifer (1) nach einem der vorangegangenen Ansprüche, **dadurch gekennzeichnet, dass** der Backenkörper (21, 31) in einem Seitenbereich einen Betätigungsabschnitt (25, 35) aufweist, welcher direkt als Steuerelement fungiert oder mit einem separaten Steuerelement gekoppelt ist und wobei ein Befestigungsabschnitt (23, 24, 33, 34) an den Betätigungsabschnitt (25, 35) angrenzt, mit dem der Backenkörper (21, 31) im Greiferkörper (10) gelagert ist, und dass der Betätigungsabschnitt (25, 35) relativ zum Befestigungsabschnitt (23, 24, 33, 34) abgebogen ist.

8. Greifer (1) nach einem der vorangegangenen Ansprüche, **dadurch gekennzeichnet, dass** der Klemmbereich (22, 32) derart geformt ist, dass im geschlossenen Zustand zusammen mit der weiteren Greiferbacke (20, 30) eine Aufnahme (40) mit einer definierten Mindestgrösse ausgebildet wird.

9. Greifer (1) nach Anspruch 8, **dadurch gekennzeichnet, dass** der Klemmbereich (22, 32) an unterschiedliche Formen und Grössen der aufzunehmenden Gegenstände anpassbar ist, indem er elastisch verformbare Klemmelemente (60) mit einer höheren Elastizität als der Backenkörper aufweist, welche den Gegenstand im Anwendungsfall umschliessen.

10. Greifer (1) nach einem der vorangegangenen Ansprüche, **dadurch gekennzeichnet, dass** der Greifer (1) mindestens zwei erste Greiferbacken (20) und mindestens zwei zweite Greiferbacken (30) aufweist, wobei jede erste Greiferbacke (20) relativ zu mindestens einer zweiten Greiferbacke (30) einen offenen und einen geschlossenen Zustand einnehmen und eine Klemmkraft auf den zu ergreifenden Gegenstand (2) ausüben kann und/oder umgekehrt auch jede zweite Greiferbacke (30) relativ zu mindestens einer ersten Greiferbacke (20) einen offenen und einen geschlossenen Zustand einnehmen und eine Klemmkraft auf den zu ergreifenden Gegenstand (2) ausüben kann.

11. Greifer (1) nach Anspruch 10, **dadurch gekennzeichnet, dass** jede erste Greiferbacke (20) relativ zu einer einzigen zweiten Greiferbacke (30) einen offenen und einen geschlossenen Zustand einnehmen und eine Klemmkraft auf den zu ergreifenden Gegenstand (2) ausüben kann, und dass auch jede zweite Greiferbacke (30) relativ zu einer einzigen ersten Greiferbacke (20) einen offenen und einen geschlossenen Zustand einnehmen und eine Klemmkraft auf den zu ergreifenden Gegenstand (2) ausüben kann.

12. Greifer (1) nach einem der Ansprüche 10 oder 11, **dadurch gekennzeichnet, dass** mehrere erste Greiferbacken (20) durch ein gemeinsames Steuerelement (25) ausgelenkt werden und/oder mehrere zweite Greiferbacken (30) durch ein gemeinsames, anderes Steuerelement (35) ausgelenkt werden, und dass der Greifer (1) eine Anzahl von Steuerelementen (25, 35) aufweist, welche grösser oder gleich der Anzahl der ersten Greiferbacken (20) und/oder grösser oder gleich der Anzahl der zweiten Greiferbacken (30) ist.

13. Förderanlage (80, 81) mit einem Antriebsorgan, das entlang einer geschlossenen Umlaufbahn (U, U') bewegbar ist, und einer Mehrzahl von Greifern (1) nach einem der vorangegangenen Ansprüche 1-12, die an das Antriebsorgan (82) angekoppelt oder ankoppelbar sind.

14. Förderanlage (80, 81) nach Anspruch 13, welche einen Überführungsmechanismus umfasst, der einen ergriffenen Gegenstand (2) aus einem ersten Greifer (1) der Förderanlage (80, 81) in einen zweiten Greifer (1) der Förderanlage (80, 81) überführen kann, wobei insbesondere der ergriffene Gegenstand (2) aus einer ersten Position bezüglich des ersten Greifers (1) in eine zweite Position bezüglich des zweiten Greifers (1) überführt wird und die erste und die zweite Position sich bezüglich des jeweiligen Greifers (1) in Kontaktstellen mit dem Greifer (1), Lage des Gegenstands (2) bezüglich des Greifers (1) und/oder Orientierung des Gegenstands (2) bezüglich des Greifers (1) unterscheiden.

15. Förderanlage (80, 81) nach Anspruch 13 oder 14, mit einer Mehrzahl von Greifern (1), die eine einzeln steuerbare erste Greiferbacke (20) und eine im wesentlichen baugleich gestaltete zweite Greiferbacke (30) und diesen zugeordnete erste und zweite Steuerelemente (25, 35) aufweisen, und mit ersten und zweiten Steuerkulissen (72, 74, 91, 92), welche mit den ersten bzw. zweiten Steuerelementen (25, 35) zusammenwirken, zum gezielten Öffnen der ersten und/oder zweiten Greiferbacke (20, 30).

16. Förderanlage (80, 81) nach Anspruch 15, **gekennzeichnet durch** eine Öffnungsstelle, an welcher eine erste und eine zweite Steuerkulisse (72, 74, 91, 92) angeordnet sind, wobei die Steuerkulissen (72, 74, 91, 92) **durch** eine Steuereinrichtung aktiviert und deaktiviert werden können, um wahlweise die erste und/oder die zweite Greiferbacke (20, 30) zu öffnen.

17. Verfahren zum Betrieb einer Förderanlage (80, 81) mit den Merkmalen von Anspruch 16, **dadurch gekennzeichnet, dass** an der Öffnungsstelle (S) wahlweise die erste und/oder die zweite Steuerkulisse (72, 74, 91, 92) aktiviert wird und dadurch wahlweise die erste (20) und/oder zweite (30) Greiferbacke bewegt wird, dass dadurch von den Greifern (1) erfasste Gegenstände (2) an der Öffnungsstelle (S) in unterschiedliche Richtungen abgegeben und unterschiedlichen weiteren Förderwegen und/oder Bearbeitungsstationen und/oder Sammelstellen zugeführt werden.

18. Verfahren zum Betrieb einer Förderanlage (80, 81) mit den Merkmalen von einem der Ansprüche 13 bis 16, **dadurch gekennzeichnet, dass** in einem ersten Schritt ein zu ergreifender Gegenstand (2) von einem ersten Greifer (1) der Förderanlage (80, 81) ergriffen wird, in einem zweiten Schritt der ergriffene Gegenstand (2) vom ersten Greifer (1) der Förderanlage (80, 81) an einen zweiten Greifer (1) der Förderanlage (80, 81) überführt wird und in einem dritten Schritt der ergriffene Gegenstand (2) vom zweiten Greifer (1) der Förderanlage (80, 81) abgegeben wird.

19. Verfahren nach Anspruch 18, **dadurch gekennzeichnet, dass** im zweiten Schritt der ergriffene Gegenstand (2) aus einer ersten Position bezüglich des ersten Greifers (1) in eine zweite Position bezüglich des zweiten Greifers (1) überführt wird und die erste und die zweite Position sich bezüglich des jeweiligen Greifers (1) in Kontaktstellen mit dem Greifer (1) und/oder Lage des Gegenstands (2) bezüglich des Greifers (1) und/oder Orientierung des Gegenstands (2) bezüglich des Greifers (1) unterscheiden.

## Claims

1. A gripper (1) for grasping objects (2) and conveying held objects (2), in particular for taking hold of and conveying spatially extended, symmetrical objects, said gripper having a gripper body (10), a first gripper jaw (20) and a second gripper jaw (30) each of which comprises at least one clamping region (22, 32) and each of which is able to assume an open and a closed state in relation to one another and each of which is able to exert a clamping force onto the object (2) to be grasped, and having at least one control element (25, 35) which is capable of interacting with a control link (72, 74, 91, 92), wherein at least one of the gripper jaws (20, 30) includes a jaw body (21, 31) which is elastically deformable and is mounted on the gripper body (10) such that without force acting on the control element (25, 35) the gripper jaws (20, 30) assume a defined spatial position and when force does act on the control element (25, 35) and/or on the gripper jaws (20, 30) they deform and are deflected out of the defined spatial position, **characterized in that** the jaw body is a bow (21, 31) made of a wire-shaped or tubular material..

2. The gripper (1) as claimed in claim 1, **characterized in that** the jaw body (21, 31) is mounted on the gripper body (10) at at least three points, which do not lie along one common axis, or at at least two different axes (A1, A2, A1', A2').

3. The gripper (1) as claimed in claim 1 or 2, **characterized in that** the jaw body (21, 31) comprises portions which are loaded with torsion and flexion when force acts on the control element and/or when an object is held.

4. The gripper (1) as claimed in one of the preceding claims, **characterized in that** the jaw body consists at least in part of an elastically deformable material.

5. The gripper (1) as claimed in one of the preceding claims, **characterized in that** the jaw body is of one part or multiple parts.

6. The gripper (1) as claimed in one of the preceding claims, **characterized in that** the jaw body (21, 31) comprises at least two fastening portions (23, 24, 33, 34) which are spaced apart from one another, between which the clamping region (22, 32) is located and by way of which the jaw body (21, 31) is mounted in or on bearing regions (11, 12, 13, 14) of the gripping body (10), wherein the bearing regions (11, 12, 13, 14) and consequently the fastening portions (23, 24, 33, 34) are aligned in the gripper body (10) along different axes (A1, A2, A1', A2').

7. The gripper (1) as claimed in one of the preceding claims, **characterized in that** in a lateral region the jaw body (21, 31) comprises an actuating portion (25, 35) which functions directly as a control element or is coupled with a separate control element and wherein a fastening portion (23, 24, 33, 34) adjoins the actuating portion (25, 35), by way of which the jaw body (21, 31) is mounted in the gripper body (10), and **in that** the actuating portion (25, 35) is bent in relation to the fastening portion (23, 24, 33, 34).

8. The gripper (1) as claimed in one of the preceding claims, **characterized in that** the clamping region (22, 32) is formed in such a manner that in the closed state together with the further gripper jaw (20, 30) a receiving means (40) with a defined minimum size is formed.

9. The gripper (1) as claimed in claim 8, **characterized in that** the clamping region (22, 32) is adaptable to the different forms and sizes of the objects (2) to be received by said clamping region by way of comprising elastically deformable clamping elements (60) which have a greater degree of elasticity than the jaw body and which in use surround the object (2).

10. The gripper (1) as claimed in one of the preceding claims, **characterized in that** the gripper (1) comprises at least two first gripper jaws (20) and at least two second gripper jaws (30), wherein each first gripper jaw (20) is able to assume an open and a closed state in relation to at least one second gripper jaw (30) and is able to exert a clamping force onto the object (2) to be grasped and/or also in reverse each second gripper jaw (30) is able to assume an open and a closed state in relation to at least one first gripper jaw (20) and is able to exert a clamping force onto the object (2) to be grasped.

11. The gripper (1) as claimed in claim 10, **characterized in that** each first gripper jaw (20) is able to assume an open and a closed state in relation to one single second gripper jaw (30) and is able to exert a clamping force onto the object (2) to be grasped, and **in that** also each second gripper jaw (30) is able to assume an open and a closed state in relation to one single first gripper jaw (20) and is able to exert a clamping force onto the object (2) to be grasped.

12. The gripper (1) as claimed in either of claims 10 and 11, **characterized in that** several first gripper jaws (20) are deflected by one common control element (25) and/or several second gripper jaws (30) are deflected by one different, common control element (35), and **in that** the gripper (1) comprises a number of control elements (25, 35) which is greater than or equal to the number of the first gripper jaws (20) and/or greater than or equal to the number of second gripper jaws (30).

13. A conveyor system (80, 81) having a drive member which is movable along a closed circular path (U, U') and a plurality of grippers (1) as claimed in one of the preceding claims 1-12 which are coupled to or are couplable to the drive member (82).

14. The conveyor system (80, 81) as claimed in claim 13, said conveyor system including a transferring mechanism which is able to transfer a grasped object (2) from a first gripper (1) of the conveyor system (80, 81) into a second gripper (1) of the conveyor system (80, 81), wherein in particular the grasped object (2) is transferred out of a first position with reference to the first gripper (1) into a second position with reference to the second gripper (1) and the first and the second position differ with reference to the respective gripper (1) in contact points with the gripper (1), in the position of the object (2) with reference to the gripper (1) and/or in the orientation of the object (2) with reference to the gripper (1).

15. The conveyor system (80, 81) as claimed in claim 13 or 14, said conveyor system having a plurality of grippers (1) which comprise one single controllable first gripper jaw (20) and one substantially identically constructed second gripper jaw (30) and first and second control elements (25, 35) which are associated therewith, and having first and second control links (72, 74, 91, 92) which interact with the first or second control elements (25, 35) for the targeted opening of the first and/or second gripper jaw (20, 30).

16. The conveyor system (80, 81) as claimed in claim 15, **characterized by** an opening position (S) at which a first and a second control link (72, 74, 91, 92) are arranged, wherein the control links (72, 74, 91, 92) are able to be activated and deactivated by a control device in order to open the first and/or the second gripper jaw (20, 30) in a selective manner.

17. A method for operating a conveyor system (80, 81) having the features of claim 16, **characterized in that** the first and/or the second control link (72, 74, 91, 92) is activated in a selective manner at the opening position (S) and as a result the first (20) and/or second (30) gripper jaw is moved in a selective manner, and **in that**, as a result, objects (2) grasped by the grippers (1) are discharged in different directions at the opening position (S) and are supplied to different further conveying paths and/or processing stations and/or collecting positions.

18. The method for operating a conveyor system (80, 81) having the features of one of claims 13 to 16, **characterized in that** in a first step an object (2) to be grasped is grasped by a first gripper (1) of the conveyor system (80, 81), in a second step the grasped object (2) is transferred from the first gripper (1) of the conveyor system (80, 81) to a second gripper (1) of the conveyor system (80, 81) and in a third step the grasped object (2) is discharged from the second gripper (1) of the conveyor system (80, 81).

19. The method according to claim 18, **characterized in that** in the second step the grasped object (2) is transferred from a first position with reference to the first gripper (1) into a second position with reference to the second gripper (1) and the first and the second position with reference to the respective gripper (1) differ in contact points with the gripper (1) and/or in the position of the object (2) with reference to the gripper (1) and /or in the orientation of the object (2) with reference to the gripper (1).

## Revendications

1. Pince (1) destinée à saisir et transporter des objets (2) en les maintenant, en particulier à saisir et transporter des objets symétriques s'étendant dans l'espace, la pince (1) présentant
un corps de pince (10),
une première mâchoire de pince (20) et une deuxième mâchoire de pince (30) qui présentent toutes deux au moins une partie de serrage (22, 32), qui prennent l'une par rapport à l'autre une position ouverte et une position fermée et qui peuvent exercer une force de serrage sur l'objet (2) à saisir et
au moins un élément de commande (25, 35) qui est en mesure de coopérer avec un coulisseau de commande (72, 74, 91, 92),
au moins l'une des mâchoires de pince (20, 30) comportant un corps de mâchoire (21, 31) élastiquement déformable et monté sur le corps de pince (10) de telle sorte que les mâchoires de pince (20, 30) prennent une position spatiale définie sans qu'une force soit exercée sur l'élément de commande (25, 35) et se déforment lorsqu'une force est exercée sur l'élément de commande (25, 35) et/ou sur les mâchoires de pince (20, 30) qui sont ainsi sorties de la position spatiale définie, **caractérisée en ce que**
le corps de mâchoire est un étrier (21, 31) constitué d'un matériau en forme de fil ou de tube.

2. Pince (1) selon la revendication 1, **caractérisée en ce que** le corps de mâchoire (21, 31) est monté sur le corps de pince (10) en au moins trois points qui ne sont pas situés le long d'un axe commun, ou en au moins deux axes différents (A1, A2, A1', A2').

3. Pince (1) selon les revendications 1 ou 2, **caractérisée en ce que** le corps de mâchoire (21, 31) présente des sections qui sont sollicitées en torsion et en flexion lorsqu'une force est exercée sur l'élément de commande et/ou lors du maintien d'un objet.

4. Pince (1) selon l'une des revendications précédentes, **caractérisée en ce que** le corps de mâchoire est constitué au moins en partie d'un matériau élastiquement déformable.

5. Pince (1) selon l'une des revendications précédentes, **caractérisée en ce que** le corps de mâchoire est réalisé en une ou plusieurs pièces.

6. Pince (1) selon l'une des revendications précédentes, **caractérisée en ce que** le corps de mâchoire (21, 31) présente au moins deux sections de fixation (23, 24, 33, 34) situées à distance l'une de l'autre, entre lesquelles est située la zone de serrage (22, 32) et par lesquelles le corps de mâchoire (21, 31) est monté sur des parties de montage (11, 12, 13, 14) du corps de pince (10), les parties de montage (11, 12, 13, 14) et donc les sections de fixation (23, 24, 33, 34) étant alignées dans le corps de pince (10) suivant des axes (A1, A2, A1', A2') différents.

7. Pince (1) selon l'une des revendications précédentes, **caractérisée en ce que** le corps de mâchoire (21, 31) présente dans une partie latérale une section d'actionnement (25, 35) qui agit directement comme élément de commande ou est accouplée à un élément de commande séparé, une section de fixation (23, 24, 33, 34) étant adjacente à section de fixation (25, 35) par laquelle le corps de mâchoire (21, 31) est monté dans le corps de pince (10) et **en ce que** la section d'actionnement (25, 35) est fléchie par rapport à la section de fixation (23, 24, 33, 34).

8. Pince (1) selon l'une des revendications précédentes, **caractérisée en ce que** la partie de serrage (22, 32) est configurée de telle sorte qu'en situation fermée, un logement (40) d'une taille minimale définie est formé avec l'autre mâchoire de pince (20, 30).

9. Pince (1) selon la revendication 8, **caractérisée en ce que** la partie de serrage (22, 32) est adaptable à différentes formes et tailles des objets à reprendre en présentant des éléments élastiquement déformables de serrage (60) dont l'élasticité est plus élevée que celle du corps de mâchoire et qui englobe l'objet en utilisation.

10. Pince (1) selon l'une des revendications précédentes, **caractérisée en ce que** la pince (1) présente au moins deux premières mâchoires de pince (20) et au moins deux deuxièmes mâchoires de pince (30), chaque première mâchoire de pince (20) pouvant prendre une position ouverte et une position fermée par rapport à au moins une deuxième mâchoire de pince (30) et exercer une force de serrage sur l'objet (2) à saisir et/ou inversement chaque deuxième mâchoire de pince (30) pouvant prendre par rapport à au moins une première mâchoire de pince (20) une position ouverte et une position fermée et exercer une force de serrage sur l'objet (2) à saisir.

11. Pince (1) selon la revendication 10, **caractérisée en ce que** chaque première mâchoire de pince (20) peut prendre par rapport à une seule deuxième mâchoire de pince (30) une position ouverte et une position fermée et exercer une force de serrage sur l'objet (2) à saisir et **en ce qu'**également chaque deuxième mâchoire de pince (30) peut prendre par rapport à une seule première mâchoire de pince (20) une position ouverte et une position fermée et exercer une force de serrage sur l'objet (2) à saisir.

12. Pince (1) selon l'une des revendications 10 ou 11, **caractérisée en ce que** plusieurs premières mâchoires de pince (20) sont déviées par un élément de commande (25) commun et/ou **en ce que** plusieurs deuxièmes mâchoires de pince (30) sont déviées par un autre élément de commande (35) commun et **en ce que** la pince (1) présente plusieurs éléments de commande (25, 35) dont le nombre est plus grand ou égal au nombre des premières mâchoires de pince (20) et/ou plus grand ou égal au nombre des deuxièmes mâchoires de pince (30).

13. Installation de transport (80, 81) dotée d'un organe d'entraînement qui peut être déplacé le long d'une piste (U, U') en boucle fermée et plusieurs pinces (1) selon l'une des revendications 1 à 12 qui précèdent, accouplée ou apte à être accouplée à l'organe d'entraînement (82).

14. Installation de transport (80, 81) selon la revendication 13, qui comporte un mécanisme de transfert qui peut transférer un objet (2) saisi depuis une première pince (1) de l'installation de transport (80, 81) jusque dans une deuxième pince (1) de l'installation de transport (80, 81), l'objet (2) saisi étant en particulier transféré depuis une première position par rapport à la première pince (1) jusque dans une deuxième position par rapport à la deuxième pince (1), la première et la deuxième position étant différentes pour chaque pince (1) pour les points de contact avec la pince (1), la position de l'objet (2) par rapport à la pince (1) et/ou l'orientation de l'objet (2) par rapport à la pince (1).

15. Installation de transport (80, 81) selon les revendications 13 ou 14, présentant plusieurs pinces (1) qui présentent chacune une première mâchoire de pince (20) asservie et une deuxième mâchoire de pince (30) de configuration essentiellement identique et des premiers et deuxièmes éléments de commande (25, 35) associés à ces dernières, et des premiers et des deuxièmes coulisseaux de commande (72, 74, 91, 92) qui coopèrent avec les premiers ou les deuxièmes éléments de commande (25, 35) pour ouvrir de manière contrôlée la première et/ou la deuxième mâchoire de pince (20, 30).

16. Installation de transport (80, 81) selon la revendication 15, **caractérisée par** un emplacement d'ouverture sur lequel un premier et un deuxième coulisseau de commande (72, 74, 91, 92) sont disposés, les coulisseaux de commande (72, 74, 91, 92) pouvant être activés et désactivés par un dispositif de commande pour ouvrir sélectivement les premières et/ou les deuxièmes mâchoires de pince (20, 30).

17. Procédé de conduite d'une installation de transport (80, 81) qui présente les caractéristiques de la revendication 16, **caractérisé en ce qu'**à l'emplacement d'ouverture (S), le premier et/ou le deuxième coulisseau de commande (72, 74, 91, 92) sont activés sélectivement et qu'ainsi la première mâchoire de pince (20) et/ou la deuxième mâchoire de pince (30) sont déplacées sélectivement, **en ce qu'**ainsi des objets (2) saisis par les pinces (1) sont délivrés en différentes directions en l'emplacement d'ouverture (S) et peuvent être amenés vers d'autres parcours de transport différents, vers postes de traitements différents et/ou vers postes de rassemblement différents.

18. Procédé de conduite d'une installation de transport (80, 81) qui présente les caractéristiques de l'une des revendications 13 à 16, **caractérisé en ce que** dans une première étape, un objet (2) à saisir est saisi par une première pince (1) de l'installation de transport (80, 81), dans une deuxième étape, l'objet (2) saisi par la première pince (1) de l'installation de transport (80, 81) est transféré à une deuxième pince (1) de l'installation de transport (80, 81) et dans une troisième étape, l'objet (2) saisi est délivré par la deuxième pince (1) de l'installation de transport (80, 81).

19. Procédé selon la revendication 18, **caractérisé en ce que** dans la deuxième étape, l'objet (2) saisi est transféré d'une première position par rapport à la première pince (1) jusque dans une deuxième position par rapport à la deuxième pince (1), la première et la deuxième position étant différentes pour chaque pince (1) pour les points de contact avec la pince (1), la position de l'objet (2) par rapport à la pince (1) et/ou l'orientation de l'objet (2) par rapport à la pince (1).
